# EUROPÄISCHE PATENTSCHRIFT

(11) **EP 0 838 396 B1**
(45) Veröffentlichungstag und Bekanntmachung des Hinweises auf die Patenterteilung: **21.05.2003**
(21) Anmeldenummer: 97117546.8
(22) Anmeldetag: 10.10.1997
(51) Int. Cl.: B64D 41/00, B64C 13/42, B64C 13/50, H02J 9/06, H02J 3/46

(54) **Leistungswandler-System zur bidirektionalen Wandlung zwischen hydraulischer und elektrischer Energie**
Power converting system for bidirectional conversion between hydraulic and electrical energy
Système de conversion d'énergie pour la transformation bidirectionelle entre l'énergie hydraulique et électrique

(30) Priorität: 25.10.1996 DE 19644340
(43) Veröffentlichungstag der Anmeldung: 29.04.1998
(73) Patentinhaber: Airbus Deutschland GmbH, 21129 Hamburg (DE)
(72) Erfinder: Carl, Udo, Prof. Dr., 21077 Hamburg (DE); Besing, Wolfgang, 27711 Osterholz-Scharmbeck (DE); Frischemeier, Stefan, 21129 Hamburg (DE)
(74) Vertreter: Hansmann, Dierk, Dipl.-Ing.

(56) Entgegenhaltungen:
- DE-A- 3 220 782
- GB-A- 2 052 185
- US-A- 4 422 180
- US-A- 4 754 940
- US-A- 4 912 921

## Beschreibung

Die Erfindung bezieht sich auf ein Leistungswandler-System zur bidirektionalen Wandlung zwischen hydraulischer und elektrischer Energie für die Versorgung von Energiesystemen eines Fahrzeuges, wobei mit der bidirektional gewandelten und wahlweise bereitgestellten Energieart die Versorgung der (des) elektrischen oder der (des) hydraulischen Energiesysteme(s) an Bord des Fahrzeuges, vorzugsweise an Bord eines Luftfahrzeuges, realisiert wird.

Bei Bordenergiesystemen bekannter Fahrzeuge wird deren Betriebssicherheit weitestgehend mit autonom arbeitenden Energiequellen gewährleistet, über deren bereitgestellte (abgegebene) hydraulische und / oder elektrische Energie (Leistung) die im System installierten Verbraucher der verschiedensten sicherheitskritischen Energiesysteme ständig zu verfügen haben. Davon sind die (in einem Fahrzeug installierten) hydraulischen Betätigungssysteme (zur Fahrzeugsteuerung) und die elektrischen / elektronischen Systeme, insbesondere die Energie- und Rechneranlagen [Computer] (zur Navigation und Kommunikation bzw. zur Fahrzeugsteuerung) betroffen. Diese ausfallsicheren hydraulischen und elektrischen Bordenergiesysteme traditioneller Art bestehen (in der Regel) aus vermehrtachten (redundanten), unabhängigen Energiequellen (Generatoren oder Pumpen), die an jedem Triebwerk eines Fahrzeuges angeordnet sind und in ein Verteilersystem, primär über eine Drehstrom-Sammelschiene (AC-BUS BAR) bzw. in ein hydraulisches Netz, einspeisen.

Im Fahrzeugbau sind dafür Systemlösungen für elektrische und hydraulische Fahrzeug-Bordenergiesysteme bekannt, die anhand vereinfachter Systemschemata nachfolgend erläutert werden.

Eine dieser Systemlösungen bezieht sich auf ein typisches Bordenergiesystem für ein Fahrzeug mit vier Triebwerken, wobei jedes dieser Triebwerke einen Drehstromgenerator mit integriertem Konstantdrehzahlgetriebe (integrated drive generator) trägt, der im Normalfall auf die ihm zugeordnete Drehstrom-Sammelschiene (AC BUS) elektrische Energie abgibt. Beim Ausfall eines oder mehrerer dieser Triebwerke oder eines einzelnen oder mehrerer (den Triebwerken zugeordneten) Generatoren besteht (nur) die Möglichkeit, letztere mittels einem (den Generatoren nachgeordneten) Sammelschienen-Schalter von der betreffenden generatorgespeisten Haupt-Sammelschiene freizuschalten (zu isolieren).

Die generatorgespeisten Haupt-Sammelschienen sind mittels weiterer abschaltbarer Sammelschienen quer (horizontal) miteinander verbunden. Insofern werden dann (bei Triebwerksstörung bzw. Ausfall einzelner Generatoren) die wichtigen elektrischen Verbraucher über die Sammelschienen-Schalter zwischen den weiteren Sammelschienen mit elektrischer Leistung quergespeist und demnach von der betreffenden generatorgespeisten Haupt-Sammelschiene versorgt. Innerhalb derartiger Energiesysteme sind bekanntermaßen Geräte integriert, die innerhalb des elektrischen Bordnetzsystems als Notstrom-Generator arbeiten. Diese Geräte [CSMG (constant speed motor generator)] erlauben es, hydraulische Energie in elektrische Energie zu wandeln, die auf eine Drehstrom-Sammelschiene [AC ESS (essential)] zur Versorgung von besonders kritischen Verbrauchern gespeist wird. Die Primärenergie für einen (in der vorgestellten Systemlösung berücksichtigten) derartigen Notstrom-Generator wird einem der (drei installierten) hydraulischen Systeme entnommen, denen entweder von den triebwerkgetriebenen Hydraulikpumpen oder aber von einer Stauluftturbine [RAT (Ram Air Turbine)] mit gekoppelter Hydraulikpumpe hydraulische Energie bereitgestellt wird. Die Notwendigkeit der Bereitstellung von elektrischer Notenergie durch den Notstromgenerator kann (im Bedarfsfall) definitiv durch Mehrfachfehler (Ausfall aller (den Triebwerken zugeordneten) Generatoren, Kombinationsfälle von Triebwerks-und Generatorfehlern, temporärer Ausfall aller vier Triebwerke) ausgelöst sein. Die Systemlösung berücksichtigt, daß beim Auftreten derartiger (einzelner) Fehler in Notfall-Situationen eine zusätzliche sicherheitsbedeutsame Sammelschiene alternativ die Versorgung von (wenigstens) zwei quer verbundenen (quergespeisten) Drehstrom-Sammelschienen über einen Mehrwegeschalter realisiert, die dann mit der (vom Notstromgenerator bereitgestellten) elektrischen Notstromenergie versorgt wird.

Die hydraulische Bordenergieanlage des Fahrzeuges besteht nach der vorgestellten Systemlösung aus drei unabhängigen hydraulischen Systemen, von denen zwei der Systeme primär von je einer triebwerkgetriebenen Hydraulikpumpe gespeist werden. Diese Pumpen werden in der Regel konstantdruckgeregelt eingesetzt. Um bei Mehrfachausfällen von Triebwerken und / oder triebwerkgetriebenen Hydraulikpumpen (vergleichbar den geschilderten Kombinationen bei der Bereitstellung elektrischer Energie in Notfallsituationen) über ein Minimum an hydraulischer Energie zu verfügen, ist an der Stauluftturbine eine hydraulische Pumpe installiert, die im Notfall (Bedarfsfall) hydraulische Energie in das hydraulische Netz eines (der drei Systeme) unabhängigen hydraulischen Systems einspeist.

Weiterhin sind jedem unabhängigen hydraulischen System zusätzlich druckgeregelte Hydraulikpumpen installiert, die jeweils von einem Elektromotor (typischerweise einem Drehstrom-Asynchronmotor) angetrieben werden, der von einer der elektrischen Sammelschienen gespeist wird. Diese zusätzlichen (elektromotorgetriebenen) Hydraulikpumpen dienen in der Regel zur Leistungsversorgung der hydraulischen Systeme (des parkenden Fahrzeuges), wenn die triebwerksgetriebenen Hydraulikpumpen oder die Triebwerke (einzeln oder alle) nicht in Betrieb sind; vornehmlich also bei Wartungsarbeiten oder Testbetriebsbedingungen. Sie können bei entsprechender Auslegung aber auch dazu dienen, um im Normalbetrieb (des Fahrzeuges) eine Leistungsunterstützung (bei hohem Bedarf an hydraulischer Leistung) zu gewähren oder bei Ausfall der entsprechenden triebwerkgetriebenen Hydraulikpumpen des gleichen Systems dieses mit zusätzlich bereitgestellter hydraulischer Energie zu versorgen. Diese naheliegende Situation ist bei zwei der genannten unabhängigen hydraulischen Systeme, die nur mit einer triebwerkgetriebenen Hydraulikpumpe ausgerüstet sind, sehr praxisbezogen. Weiterhin kann den (zwischen jeweils zwei der) hydraulischen Systemen eine hydraulische Leistungs-Transfereinheit [PTU (power transfer unit)] angeschlossen sein, die man alternativ der installierten zusätzlichen (elektromotorgetriebenen) Hydraulikpumpen einsetzen kann. Eine solche Leistungs-Transfereinheit erlaubt die bidirektionale Querspeisung von einem unabhängigen Hydrauliksystem mit Leistungsüberschuß zu einem anderen (ansonsten unabhängigen) Hydrauliksystem mit mangelnder Versorgung, bspw. bei niedrigem Druck oder erhöhtem Leistungsbedarf. Im weiteren wird eine Umformung des Drehstromes, den zwei der triebwerkgetriebenen Drehstrom-Generatoren separat den mit ihnen verbundenen Haupt-Sammelschienen einspeisen, mit einer Umform- / Gleichrichter-Einheit [TRU (transformer / rectifier unit)] realisiert, die der betreffenden Haupt-Sammelschiene einzeln angeschlossenen ist. Die einzelne Umform- / Gleichrichter-Einheit versorgt die angeschlossene Gleichstrom-Hauptsammelschiene (DC BUS) mit Gleichstrom.

Weitere bekannte Systemlösungen beziehen sich auf ein typisches Bordenergiesystem für ein Fahrzeug mit zwei Triebwerken, wobei ebenfalls jedes dieser Triebwerke einen Drehstromgenerator mit integriertem Konstantdrehzahlgetriebe (integrated drive generator) trägt, der im Normalfall auf die ihm zugeordnete Drehstrom-Sammelschiene (AC BUS) elektrische Energie abgibt. Die zwei nachfolgend beschriebenen Lösungen beziehen sich ebenfalls auf ein Bordenergiesystem mit drei unabhängigen hydraulischen Systemen, aber im Gegensatz zur vorgenannten Systemkonfiguration mit vier Triebwerken und vier Drehstrom-Sammelschienen hier mit zwei Triebwerken und zwei Drehstrom-Sammelschienen. Beide Systemlösungen weisen in den einzelnen Gerätetechniken: " Hydraulikpumpen, Triebwerkgeneratoren, stauluftgetriebene hydraulische Pumpe, Notstromgenerator etc. " identische Elemente auf, die bei diesen Systemlösungen hinsichtlich der Versorgung der drei unabhängigen hydraulischen Systeme bzw. der beiden Drehstrom-Hauptsammelschienen und der sicherheitskritischen Drehstrom-Sammelschiene unterschiedlich verschaltet sind.

Danach sieht eine weitere Systemlösung vor, daß jedes der beiden Triebwerke zwei hydraulische konstantdruckgeregelte Primärpumpen und einen Haupt-Generator treibt. Für den Bodenbetrieb der hydraulischen Systeme sind ebenfalls je eine elektromotorengetriebene Konstantdruckpumpe sowie eine staulurtturbinengetriebene Pumpe für die hydraulische Notversorgung vorgesehen. Zwischen zwei Drehstrom-Hauptsammelschienen kann ebenfalls elektrische Leistung bei Ausfall eines Haupt-Generators durch Schließen eines Sammelschienen-Schalters quergespeist werden. Die weitere Umformung des (den Haupt-Sammelschienen abfließenden) Drehstromes wird (analog der erstgenannten Systemlösung) mit einer Umform- / Gleichrichter-Einheit realisiert, wobei zwei dieser Einheiten die ihnen angeschlossenen Gleichstrom-Sammelschienen mit Gleichstromleistung versorgen. Die alternative Versorgung der sicherheitskritischen Drehstrom-Sammelschiene über einen Mehrwegeschalter geschieht ebenfalls analog der erstgenannten Systemlösung. Die Versorgung dieser sicherheitskritischen Drehstrom-Sammelschiene wird bei Ausfall der Haupt-Generatoren ebenfalls durch einen Notstromgenerator mit Energie aus dem zentralen hydraulischen System sichergestellt. Bei komplettem (hier: doppeltem) Triebwerkausfall oder Kombinationsfehlern einer triebwerkgetriebenen Hydraulikpumpe und Ausfall des zweiten Triebwerkes kann über eine Stauluftturbine mit gekoppelter Hydraulikpumpe dem zentralen System hydraulische Notenergie und damit auch elektrische Notenergie erzeugt und bereitgestellt werden.

Eine letzte bekannte Systemlösung für ein Fahrzeug mit zwei Triebwerken besitzt eine (der zweiten Systemlösung nahekommende) ähnliche Architektur. Die wesentlichen Unterschiede bestehen (im Vergleich zur zweiten Systemlösung) darin, daß jedes Triebwerk nur eine Hydraulikpumpe treibt, wobei jede Pumpe einem unabhängigen Hydauliksystem zugeordnet ist. Eine elektromotorengetrieben Hydraulikpumpe beliefert ein drittes Hydrauliksystem primär (auch im Normalbetrieb) mit hydraulische Energie. Diesem (dritten) Hydrauliksystem ist wiederum eine stauluftgetriebene Hydraulikpumpe angeschlossen. Das dritte hydraulische System treibt im Notfall einen Hydraulikmotor an, der mechanisch mit einem Notstromgenerator gekoppelt ist. Letzterer versorgt dann die sicherheitskritische Drehstrom-Sammelschiene mit elektrischer Notenergie. Systemspezifisch ist gleichermaßen der Einsatz der (vorerwähnten) hydraulischen Leistungstransfereinheit, die es erlaubt, hydraulische Leistung zwischen den vorhandenen beiden unabhängigen Hydrauliksystemen in wahlweise beide Richtungen zu speisen. Sie ersetzt bekanntermaßen (wie bei der ersten Systemlösung angedeutet) eine elektromotorengetrieben Hydraulikpumpe im hydraulischen System.
Zusammenfassend wird ausgeführt, daß alle drei bekannten (und ausführlich betrachteten) Systemlösungen für die hydraulischen und elektrischen Bordenergiesysteme von Fahrzeugen, die aus Sicherheitsgründen jeweils vermehrfacht (redundant) ausgeführt sind, nachfolgende funktions- und zweckidentischen Teilsysteme bzw. Geräte in (möglicherweise nur) unterschiedlicher Verschaltungs- und Zuordnungsform zu den einzelnen hydraulischen Systemen bzw. (elektrischen) Sammelschienen aufweisen. Demnach werden mehrere druckgeregelte Hydraulikpumpen, die durch Elektromotoren angetrieben werden, zur Erzeugung der benötigten hydraulischen Energie für den normalen Boden- oder Alternativbetrieb eingesetzt, die man im Einzelfall auch als Primärpumpe im Normalbetrieb einsetzt oder alternativ aufschaltet. Dabei wird elektrische Energie in mechanische (Wellen- bzw. Antriebs-)Energie umgesetzt, mit der die monofunktionell arbeitenden Hydraulikpumpen angetrieben werden. Weiterhin werden diese Bordenergiesysteme mit einem monofunktionell arbeitenden Notstromgenerator betrieben, um bei Ausfall der elektrischen Primärgeneratoren (Hauptgeneratoren) aus der bereitgestellten hydraulischen Energie (von wenigstem einem) der hydraulischen Systeme mit seiner Hilfe elektrische Energie zu gewinnen. Außerdem trägt jedes der im Systemkonzept berücksichtigten Triebwerke wenigstens einen Drehstromgenerator und eine Hydraulikpumpe, wobei die zweitgenannte Systemlösung sogar zwei Hydraulikpumpen pro Triebwerk berücksichtigt. Damit wird die Redundanz der vorhandenen Triebwerke - auch zugunsten der verbesserten Verfügbarkeit von hydraulischen und elektrischen Primärenergiequellen (Generatoren und Pumpen) - durch deren Anzahl (pro Systemlösung) verbessert.

Ein Leistungswandler-System gemäß dem oberbegriff des Anspruchs 1 ist aus US-A-4 754 940 bekannt.

Demgegenüber umfassen die betrachteten Systemlösungen eine hohe Anzahl von Teil(funktions)-systemen, um aus Gründen der geforderten Systemsicherheit des installierten Bordenergiesystems eine ständige Verfügbarkeit der hydraulischen und elektrischen Energie im betreffenden System und gleichzeitig auch eine hohe Versorgungszuverlässigkeit der beiden Energiesysteme zu gewährleisten. Dadurch werden der Installationsaufwand und gleichzeitig das Fahrzeuggewicht sowie die Betriebskosten (Treibstoffverbrauch, Wartungs- und Reparaturkosten) ungünstig beeinflußt. Außerdem wird vorgetragen, daß keine der erwähnten Systemlösungen die Ausnutzung bidirektionaler Querspeisungsmöglichkeiten des hydraulischen und des elektrischen Energiesystems vorsieht oder dazu eine Anregung vermitteln würde, ein derartiges Systemkonzept umzusetzen.

Demzufolge liegt der Erfindung die Aufgabe zugrunde, ein gattungsgemäßes Leistungswandler-System derart zu gestalten, daß sich mit ihm die bekannten Systemlösungen mit einer geringeren Anzahl von Teil(funktions)systemen umsetzen lassen, wobei ein (im Vergleich der bekannten Systemlösungen) gleichbleibendes oder höheres Sicherheitsniveau des hydraulischen und elektrischen Bordenergiesystems eines Fahrzeuges gewährleistet wird. Mit dem Leistungswandler-System soll erreicht werden, daß die installierte Gesamtleistung durch die Ausnutzung der bidirektionalen Querspeisungsmöglichkeiten von hydraulischer oder elektrischer Energie in das betreffende Energiesystem verringert wird. Gleichzeitig soll mit dem Leistungswandler-System eine bedarfsgesteuerte Leistungsverwaltung der hydraulischen und elektrischen Bordenergie im Fahrzeug bewerkstelligt werden, wobei seine Integration mit zur Absenkung der Herstellungs- und Betriebskosten des Bordenergiesystems einschließlich zur Gewichtsreduzierung des Fahrzeuges beiträgt.

Diese Aufgabe wird durch die im Anspruch 1 angegebenen Maßnahmen gelöst. In den weiteren Unteransprüchen sind zweckmäßige Weiterbildungen und Ausgestaltungen dieser Maßnahmen angegeben.

Die Erfindung ist in einem Ausführungsbeispiel anhand der beigefügten Zeichnungen näher erläutert. Es zeigen
- Fig. 1: typische bekannte hydraulische und elektrische Energieerzeugungs- und Versorgungssysteme eines Transportflugzeuges mit vier Triebwerken;
- Fig. 2: typische bekannte hydraulische und elektrische Energieerzeugungs- und Versorgungssysteme eines Transportflugzeuges mit zwei Triebwerken;
- Fig. 3: typische bekannte hydraulische und elektrische Energieerzeugungs- und Versorgungssysteme eines Transportflugzeuges mit zwei Triebwerken;
- Fig. 4: das Blockschaltbild des Leistungswandler-Systems zur bidirektionalen Wandlung zwischen hydraulischer und elektrischer Energie mit Anschluß der zu versorgenden Energiesysteme und Cockpitverbindung eines Fahrzeuges ;
- Fig. 4a: die ausführliche Darstellung des bidirektionalen hydraulisch - elektrischen Leistungswandler-System nach der Fig. 4;
- Fig. 5: das bidirektionale hydraulisch - elektrische Leistungswandler-System bei hoher Güte der Drehzahlregelung des Hydromotors:
- Fig. 6: die vereinfachte Darstellung des bidirektionalen Leistungswandler-Systems nach den Figuren 4a oder 5;
- Fig. 7a: Betriebsart "Elektro-Pumpe" des bidirektionalen Leistungswandler-Systems;
- Fig. 7b: Betriebsart "Alternativ- oder Not-Generator" des Leistungswandler-Systems;
- Fig. 7c: das bidirektionale Leistungswandler-System in primär durch eine Elektro-Pumpe versorgtem hydraulischen System mit einer Stauluftturbine;
- Fig. 8a: hydraulische und elektrische Energieerzeugungs- und Versorgungssysteme nach der Fig. 3 bei Verwendung bidirektionaler Leistungswandler-Systeme;
- Fig. 8b: hydraulische und elektrische Energieerzeugungs- und Versorgungssysteme nach der Fig. 2 bei Verwendung bidirektionaler Leistungswandler-Systeme;
- Fig. 8c: hydraulische und elektrische Energieerzeugungs- und Versorgungssysteme nach der Fig. 1 bei Verwendung bidirektionaler Leistungswandler-Systeme.

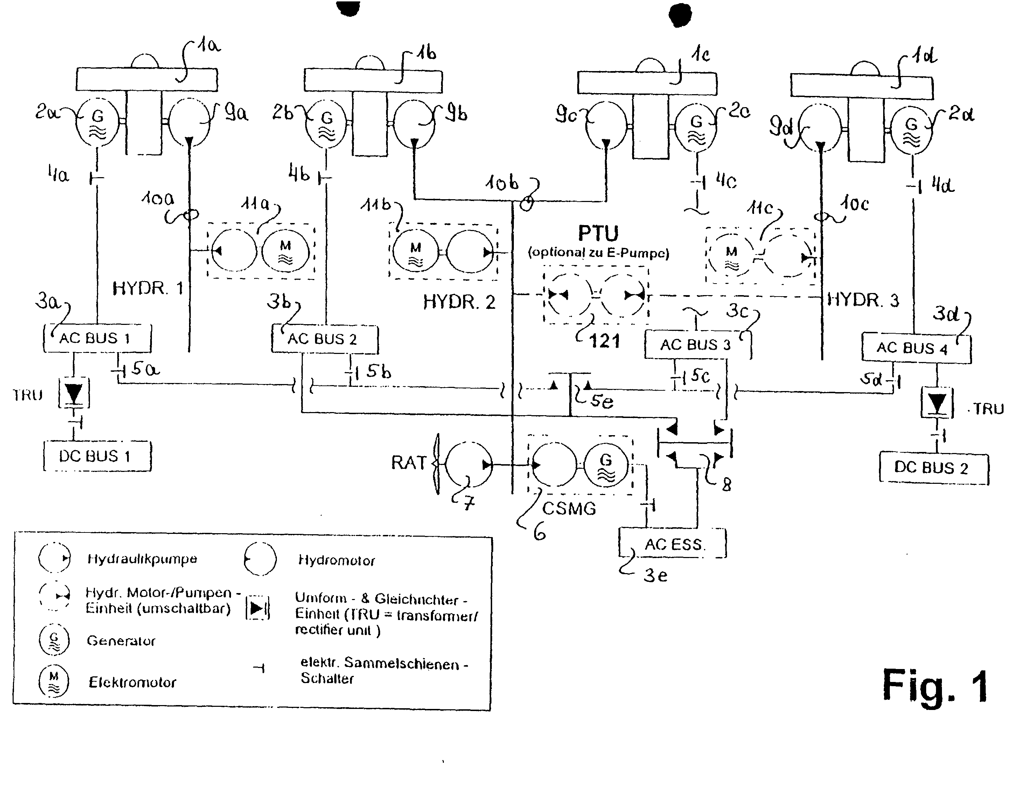

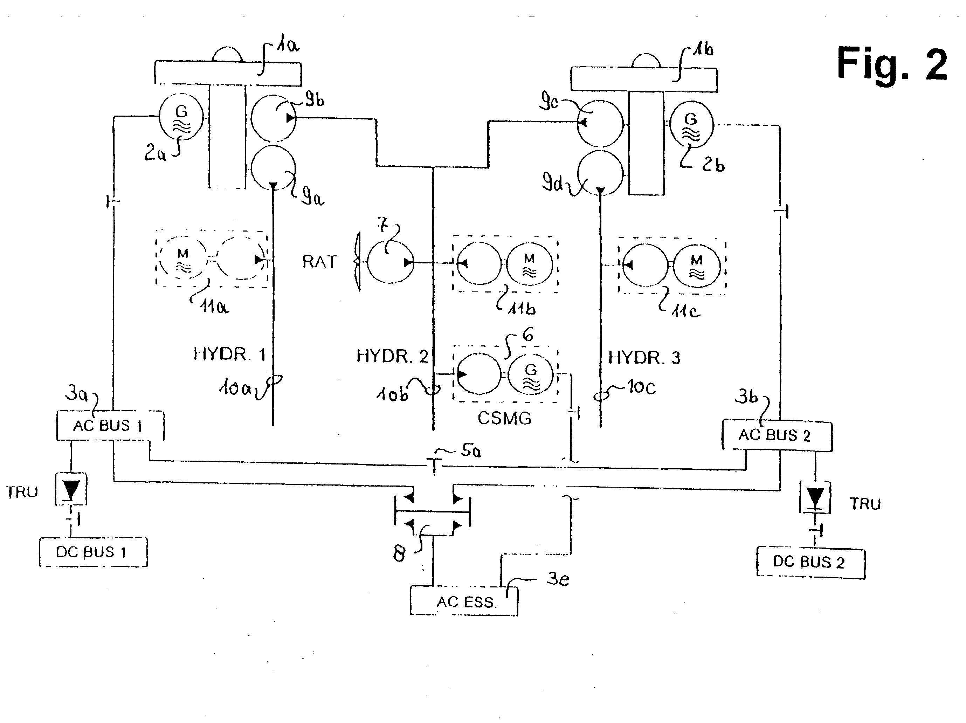

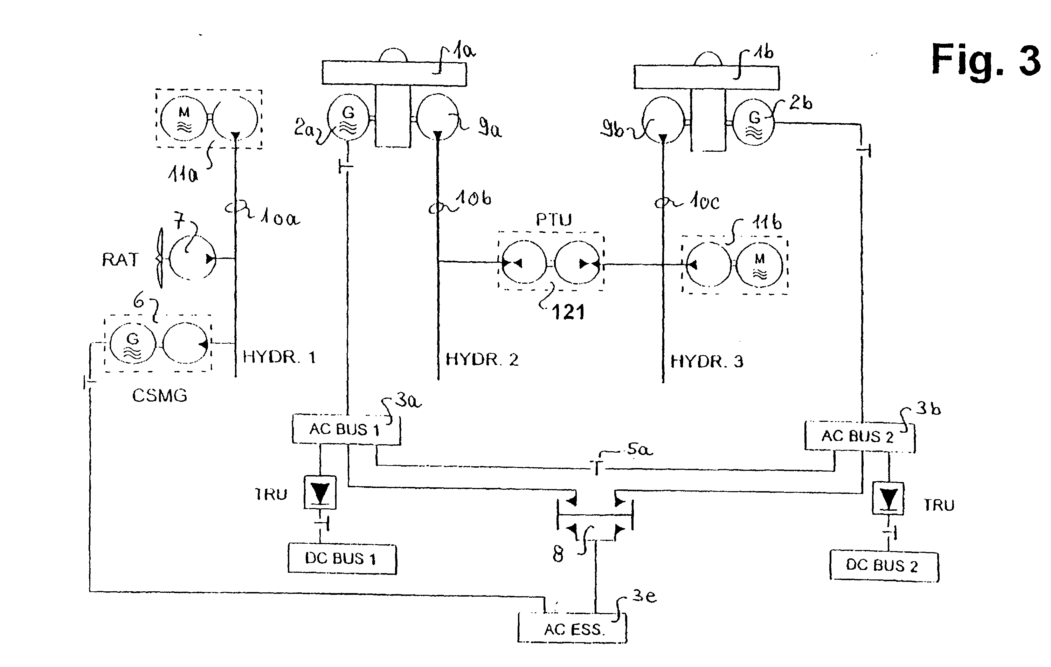

An Bord von Flugzeugen sind bekanntermaßen elektrische und hydraulische Not- und Alternativ-Energiequellen erforderlich, die gegenwärtig mit vermehrfacht installierten Energiewandlern (Pumpen, Generatoren) realisiert sind. Dabei werden elektrisch betriebene Hydraulikpumpen oder hydraulisch angetriebene Notgeneratoren eingesetzt, die den bekannten (und im Einleitungsteil gewürdigten) Systemlösungen nach den Figuren 1 bis 3 integriert sind. Im Vergleich dieser Systemlösungen, weiche typische hydraulische und elektrische Energieerzeugungs- und Versorgungssysteme eines Flugzeuges mit (nach der Fig. 1) vier Triebwerken bzw. (nach den Figuren 2 und 3) zwei Triebwerken darstellen, werden nachfolgende Verbesserungen dieser Lösungen beschrieben, mit denen die ihnen anhaftenden (und vorher kritisierten) Mängel beseitigt werden. Wegen der einleitenden (ausführlichen) Beschreibung dieser gegenwärtig im Flugzeug umgesetzten Systemlösungen wird auf weitere (diese Lösungen betreffende) Ausführungen verzichtet. Einem beurteilenden Fachmann wird es mit Hilfe der beigefügten Bezugszeichenangaben (in Korrelation der system-integrierten Mittel und deren Verschaltung zueinander) gelingen, die bekannten Systemlösungen nach den Figuren 1 bis 3 (in Korrelation dem Einleitungsteil der Beschreibung) ohne besonderen Aufwand zu bewerten.

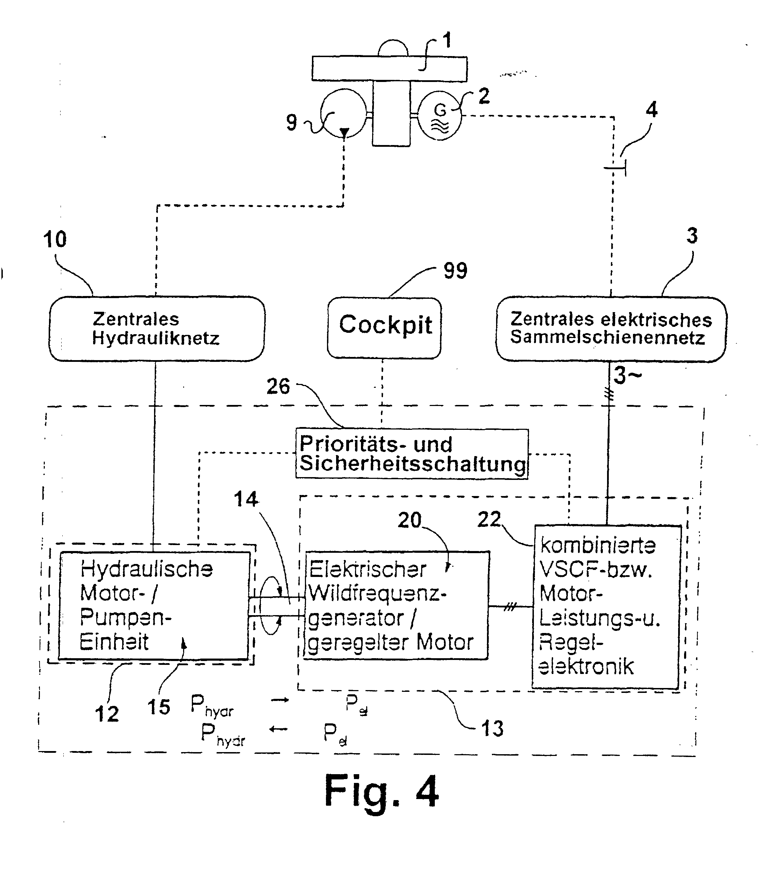

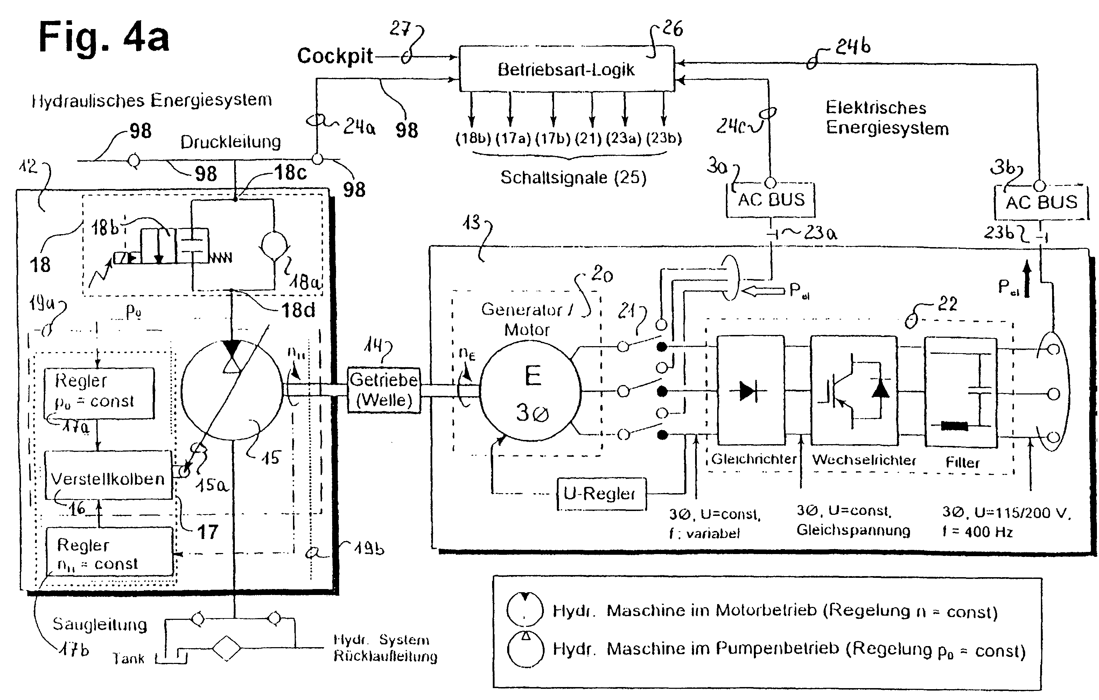

Im weiteren wird der Aufbau und die Funktion des bidirektionalen Leistungswandler-Systems anhand der Figuren 4 bis 8c näher erläutert.

In der Fig. 4 wird das Leistungswandler-System zur bidirektionalen Wandlung zwischen hydraulischer und elektrischer Energie in einem Blockschaltbild dargestellt. Dabei verkörpert das " Leistungswandler-System " in der Gesamtheit seiner Mittel und deren systembezogenen Zusammenwirken ein (sogenanntes) bidirektional arbeitendes " Hydraulisch - Elektrisches - Leistungswandler-System " (nachfolgend bezeichnet: HELW), das (funktionell betrachtet) elektrische in hydraulische Energie oder (umgekehrt) hydraulische in elektrische Energie wandelt. Es besteht aus einem hydraulischen Teilsystem 12 und einem elektrischen Teilsystem 13, die über ein Getriebe oder eine Welle 14 drehmechanisch miteinander verbunden sind, wobei die weiteren Ausführungen sich (allgemein) auf die Wellenverbindung beider Systeme beziehen wird.

Das hydraulische Teilsystem 12 besteht im wesentlichen aus einer hydraulischen Motor-/Pumpeneinheit, zu der mit (als charakteristischer Bestandteil) eine hydraulische (Verdränger-)Maschine 15 zählt, die wenigstens ein zur mechanischen Wellenkopplung vorgesehenes und drehbeweglich gelagertes Maschinenelement aufweist.
Das Kernstück des elektrischen Teilsystems 13 bildet ein (sogenannter) " elektrischer Wildfrequenz-Generator / elektrischer Motor ", zu dem mit (als charakteristischer Bestandteil) eine elektrische (Synchron-)Maschine 20 gehört, die wenigstens ein zur mechanischen Wellenkopplung vorgesehenes und drehbeweglich gelagertes Maschinenelement aufweist.
Die drehbeweglich gelagerten Maschinenelemente der hydraulischen und elektrischen Maschine 15. 20 des hydraulischen und des elektrischen Teilsystems 12, 13 sind mittels der Welle 14 oder einem Getriebe mechanisch und drehbeweglich miteinander gekoppelt, damit sich (den späteren Ausführungen vorgegriffen) die Wirkungsgrade der beiden Teilsysteme 12, 13 bei Nennleistung aufeinander abstimmen lassen.
Mit zum elektrischen Teilsystems 13 zählt eine (sogenannte) "kombinierte VSCF- bzw. Motor-Leistungs- und Regelelektronik" [VSCF: Variable Speed Constant Frequency), die (allgemein) eine elektronische Einheit 22 verkörpert, welche mit der elektrischen Maschine 20 elektrisch verbunden ist.

Auf den genauen Aufbau des hydraulischen und des elektrischen Teilsystems 12, 13 und die Wirkungsweise der ihm integrierten Elemente wird später (bezüglich der Fig. 4a) näher eingegangen.

Beiden Teilsystemen 12, 13 ist (allgemein) eine Steuereinheit 26 elektrisch (informationstechnisch) zugeschaltet, welche die Funktion einer (sogenannten) "Prioritäts- und Sicherheitsschaltung" mit systembezogener Überwachungsfunktion ausübt. Dabei überwacht die Steuereinheit 26 die beiden Teilsysteme 12, 13 und steuert auf der Basis des erfaßten und dem (allgemein) hydraulischen Leitungssystem 10, das den (Rohr-)Leitungsverbund mehrerer (hydraulischer) Leitungen zu einem zentralen Hydrauliknetz verkörpert, oder dem (allgemein) elektrischen Verteilungssystem 3, das den elektrischen Verbund mehrerer elektrischer Sammelschienen zu einem zentralen elektrischen Sammelschienennetz verkörpert, zugeordneten (aktuellen) Betriebszustandes das hydraulische oder das elektrische Teilsystem 12, 13 (die hydraulische oder die elektrische Maschine 15, 20) an, wodurch damit das entsprechende Setzen oder Schalten eines jeweils den beiden Teilsystemen 12, 13 integrierten (und in der Fig. 4 nicht gezeigten) ersten und zweiten Betriebsarten-Schaltelementes 18, 21 erfolgt und eine der bidirektionalen Funktionen der beiden Teilsysteme 12, 13 aktiviert wird.

Dementsprechend steuert die Steuereinheit 26 den Betriebsarten-Modus der beiden Teilsysteme 12, 13 (Wandlung der aufgenommenen Energieart in drehbeweglich mechanisch abgegebene Rotationsenergie, die auf (das Getriebe oder) die Welle 14 übertragen wird, oder Aufnahme der (getriebe- bzw.) wellenübertragenen Rotationsenergie und deren Wandlung in die benötigte Energieart für das hydraulische oder elektrische Bordnetz (allgemein) eines Fahrzeuges.
Dabei wird beispielsweise eine von der hydraulischen Maschine 15 angepumpte hydraulische Energie dem hydraulischen Leitungssystem 10 (dem zentralen Hydrauliknetz), das (rohr-)leitungsmäßig dem hydraulischen Teilsystem 12 angeschlossen ist, (mittels der hydraulischen Maschine 15) transferiert.
Anderenfalls wird beispielsweise die (auf die elektrische Maschine 20 übertragene Rotationsenergie von letzterer in elektrische Energie gewandelt, wobei die dann) ausgangsseitig der elektrischen Maschine 20 bereitgestellte elektrische Energie der elektronischen Einheit 22 zugeleitet wird. Dabei wird die elektronische Einheit 22 funktionell als "kombinierte VSCF- oder Motor-Leistungs- und Regelelektronik" eingesetzt, die den (später eingehender beschriebenen) Leistungselektronikteil des elektrischen Teilsystems 13 verkörpert. Die von der elektronischen Einheit 22 (in Leistungsflußrichtung betrachtet) weiterbehandelte abgegebene elektrische Energie wird dann über das mit ihr verbundene elektrische Verteilungssystem 3 in das elektrische Energiesystem des Fahrzeuges eingespeist.

Es wird erwähnt, daß eine (in Fig. 4 nicht näher gezeigte) zentralisierte elektronische Steuer- und Überwachungseinheit zusätzlich im Cockpit 99 des Fahrzeuges installiert ist, die mit einer (nicht gezeigten) Automatik-Schaltung der Steuereinheit 26 elektrisch leitend (informationstechnisch) verbunden ist. Dabei wird ergänzt, daß (vorgreifend auf nachfolgende Ausführungen) eine Betriebsmodus-Logik der Steuereinheit 26 neben der genannten Automatik-Schaltung, die das bidirektionale Leistungswandler-System bei auftretendem Druckverlust im hydraulischen System (zentralen Hydrauliknetz bzw. hydraulischen Bordsystem) oder bei auftretendem Spannungsabfall im elektrischen System (zentralen elektrischen Sammelschienensystem bzw. elektrischen Bordsystem) auf der Drehstrom-Sammelschiene entsprechend aktiviert, auch auf abgesetzte Befehle (elektronisch gesetzte Informationen) eines Piloten (allgemein betrachtet: eines Bedieners) für Testbeschaltungen und / oder zur Abschaltung der Automatik-Schaltung anspricht, sobald die signalgewandelte(n) Befehlseingabe(n) die Betriebsmodus-Logik der Steuereinheit 26 erreicht.

Außerdem sind in der Fig. 4 die getrennt (für sich) einspeisenden und unterschiedliche Energiearten (hydraulische und elektrische Energie) bereitstellenden Primärquellen mit dargestellt, die separat dem zentralen Hydrauliknetz und dem zentralen elektrischen Sammelschienennetz (eines Fahrzeuges) verbunden sind. Eine hydraulische Quelle 9 und eine elektrische Quelle 2, die am (beispielhaften) Triebwerk 1 befestigt sind, werden durch letzteres angetrieben. Dabei fördert eine triebwerkgetriebene Hauptpumpe (Hydraulikpumpe) dem ihr leitungsmäßig angeschlossenen hydraulischen Leitungssystem 10 hydraulische Energie zu, wobei sie das hydraulische Medium aus dem Tank bzw. dem Rücklaufsystem aufnimmt (abpumpt). Ein Drehstrom-Generator produziert die benötigte elektrische Energie, die er dem ihm angeschlossenen (und durch einen elektrischen Schalter abschaltbaren) elektrischen Verteilungsnetz 3 einspeist. Beide triebwerkgetriebenen Hauptquellen können sich auch (in praxi stellvertretend) auf mehrere derartig den einzelnen Triebwerken 1 eines Fahrzeuges integrierte Primärleistungsquellen verteilen.

In der Fig. 4a wird das bidirektional arbeitende Leistungswandler-System, das elektrische Energie in hydraulische Energie oder in umgekehrter Richtung des Leistungsflusses wandelt, detaillierter - für ein beispielhaftes Flugzeug - vorgestellt.
Gemäß diesem Aufbau des Leistungswandler-Systems nach der Fig. 4a kann jede der beiden mechanisch über die Welle 14 oder das Getriebe gekoppelten Maschinen 15, 20 - wie vorher angedeutet - sowohl als Motor wie auch als Wandler von mechanischer Wellenleistung (Rotationsenergie) in elektrische oder hydraulische Leistung bei entsprechender Beschaltung arbeiten. Dabei setzt die wellenangetriebene hydraulischen Maschine 15 im Pumpen-Modus mechanische Wellenleistung in entsprechende pumpengeförderte hydraulische Leistung um. Anderenfalls produziert die hydraulische Maschine 15, die aus dem hydraulischen Leitungssystem 10 Hydraulikleistung aufnimmt, im Generator-Modus - ausgangsseitig ihrem drehbeweglich gelagerten Maschinenelement - mechanische Wellenleistung, die (mechanisch) über die Welle 14 oder das Getriebe auf das drehbeweglich gelagerte Maschinenelement der elektrischen Maschine 20 übertragen wird. Letztere Maschine 20 wandelt - wie vorerwähnt - die mechanisch aufgenommene Wellenleistung im Generator-Modus in elektrische Leistung. Anderenfalls wird letztendlich umgekehrt die von der elektrischen Maschine 20 aufgenommene elektrische Energie in mechanische Wellenenergie (Rotationsenergie) umgesetzt, die ihr drehbeweglich gelagertes Maschinenelement im Motor-Modus ausgangsseitig (mechanisch) über die Welle 14 auf das drehbeweglich gelagerte Maschinenelement der hydraulischen Maschine 15 überträgt.

Das hydraulische Teilsystem 12 nach der Fig. 4a besteht im wesentlichen aus einer als hydraulische Maschine 15 eingesetzten verstellbaren hydraulischen Verdrängermaschine, vornehmlich einer Axial-Kolbenmaschine mit verstellbarer Schrägscheibe 15a, deren Hubvolumen über eine Verstelleinrichtung 16, beispielsweise einem Verstellkolben oder eine elektromechanische Verstellung, beeinflußt wird, sowie aus ihr alternativ aufschaltbaren (elektrischen / elektronischen /hydromechanischen) Reglern 17a, 17b, die auf den Verstellmechanismus der Verstelleinrichtung 16 einwirken, und einem mit der hydraulischen Verdrängermaschine 15 (rohrleitungs-)verbundenen ersten Betriebsarten-Schaltelement 18.
Das erste Betriebsarten-Schaltelement 18 stellt die Funktion einer Ventilgruppe dar, die beispielgemäß aus der Parallelschaltung zweier (rohrleitungs-)verbundener Ventile 18a, 18b integriert ist.

Demnach besteht die Ventilgruppe aus einem als Rückschlagventil ausgeführten ersten Ventil 18a und einem als Sperrventil ausgeführten zweiten Ventil 18b, deren Eingänge (rohr-)leitungsmäßig mit einer ersten Verzweigstelle 18c (Rohrleitungsverzweigung) verbunden sind, welche den Eingang des hydraulischen Teilsystems 12 darstellt. Die Ausgänge der beiden Ventile 18a, 18b sind (rohr-)leitungsmäßig mit einer zweiten Verzweigstelle 18d (Rohrleitungsverzweigung) verbunden, die (rohr-)leitungsmäßig der hydraulischen Verdrängermaschine 15 zugeschaltet ist.

Das erste Ventil 18a wird hier beispielsweise durch eine Feder in eine passive Grundstellung gebracht (in der es also nicht beispielsweise elektrisch aktiviert ist), die verhindert, daß hydraulische Leistung aus dem hydraulischen Leitungssystem 10 entnommen werden kann, umgekehrt jedoch in dieser Ventilstellung der Pumpenbetrieb der hydraulischen Maschine 15 - also der hydraulische Leistungstransfer in das hydraulische Leitungssystem 10 - nicht behindert wird. Danach wird durch diese (nicht elektrisch aktivierte Grundstellung des ersten Ventiles 18a mittels der) Feder verhindert, daß hydraulische Leistung aus dem hydraulischen Leitungssystem 10 [genauer: aus der (Hydraulik-)Leitung 98] entnommen werden kann. Umgekehrt ist es in dieser Stellung möglich, daß die hydraulische Maschine 15 (im Pumpen-Modus) über das erste Ventil 18a (Rückschlagventil) als Pumpe hydraulische Leistung in das hydraulische Leitungssystem 10 [genauer: in die Hydraulik-(Leitung 98] einspeisen kann.

Das hier durch ein (beispielsweise elektrisches) Signal geschaltete zweite Ventil 18b aktiviert den Motorbetrieb der hydraulischen Maschine 15, so daß hydraulische Leistung aus dem hydraulischen Leitungssystem 10 aufgenommen und in mechanische Leistung für das elektrische Teilsystem 13 bzw. (genauer) für die (im Generator-Modus befindliche) elektrische Maschine 20 umgewandelt wird.

Die gleiche Funktion wie in der zuvor dargestellten und beschriebenen (aus den beiden Ventilen 18a, 18b integrierten) Ventilgruppe könnte auch durch ein einzelnes - alternativ eingesetztes Ventil (single valve) <einem sogenannten Rückschlag-Freischalt-Ventil> erzielt werden. Dabei wird die Funktion des ersten Ventils 18a in die Sperrstellung des zweiten Ventils 18b integriert.

Dieses hydraulische Teilsystem 12 arbeitet als (im Stand der Technik bekannte) druckgeregelte Pumpe, deren Funktionselemente-Anordnung (in der Fig. 4a) durch den ersten Umrandungsbereich 19a dargestellt wird, oder als (im Stand der Technik bekannter) drehzahlgeregelter bzw. (sogenannter) sekundärgeregelter hydraulischer Motor, deren Funktionselemente-Anordnung (in der Fig. 4a) durch den zweiten Umrandungsbereich 19b dargestellt wird.

Bei beiden Funktionselemente-Anordnungen sind die beiden Regler 17a, 17b separat und informationstechnisch mit der Verstelleinrichtung 16 (beispielsweise mit einem Verstellkolben) verbunden. Weiterhin ist der erste Regler 17a mit (wenigstens einem) Sensor, der einem [der zweiten Verzweigstelle 18d und der Verdrängermaschine 15 angeschlossenen] (Rohr-)Leitungszweig integriert ist, verbunden. Ebenso ist der zweite Regler 17b mit (wenigstens einem) Sensor, der (beispielgemäß) die Drehbewegung (genauer: Drehzahl) der Welle 14 sensitiv erfaßt, verbunden. Diese beiden Regler 17a, 17b können elektrisch, elektromechanisch oder hydromechanisch (also unter Druck stehendes Hydraulikmedium zur Signalübertragung nutzend) ausgeführt sein: - also unter Druck stehendes Hydraulikmedium zur Signalübertragung nutzen - .

Der erste wirksame Regler 17a arbeitet im Betriebsmodus: "druckgeregelte Pumpe" als Druckregler, der den Ausgangsdruck p₀ der Pumpe sensitiv erfaßt. In diesem "Pumpen-Modus" fließt der Pumpenförderstrom über das erste Ventil 18a (Rückschlagventil) in das hydraulische Energiesystem, wobei das zweite Ventil 18b - wie figurlich dargestellt - (innerhalb der Ventilgruppe) sperrt.

Der zweite wirksame Regler 17b arbeitet im Betriebsmodus: "sekundärgeregelter hydraulischer Motor" als Drehzahlregler, der die Motordrehzahl n_{H} der Verdrängermaschine 15 (in diesem Betriebsmodus) einstellt bzw. regelt. Der Betriebsmodus wird durch Aktivieren des zweiten Ventils 18b auf Stellung "Durchgang" hergestellt, so daß der Zufluß aus der Hochdruckleitung 98 zum Hydromotor 15 erfolgt.

Der zweite Regler 17b, der auf den Verstellmechanismus wirkt, kann hierbei ein hydromechanischer Regler sein, der die Drehzahl n_{H} sensiert. Er kann auch als elektrohydraulischer Regler mit einem elektrischen Sensor, der die Messung der Drehzahl n_{H} realisiert, ausgeführt sein. Diese - mit der Ventilgruppe des ersten Betriehsarten-Schaltelementes 18 über das zweite Ventil 18b (Sperrventil) - korrelierten beiden Regler 17a, 17b sind mit der hydraulischen Verdrängermaschine 15 umschaltbar verbunden.

Der erste Regler 17a kann - für den Betriebsmodus: "druckgeregelte Pumpe" - ein hydromechanischer oder elektronischer Regler mit elektrohydraulischem Stellglied sein, jeweils auf die Verstelleinrichtung 16 für die Schrägscheibe 15a wirkend.

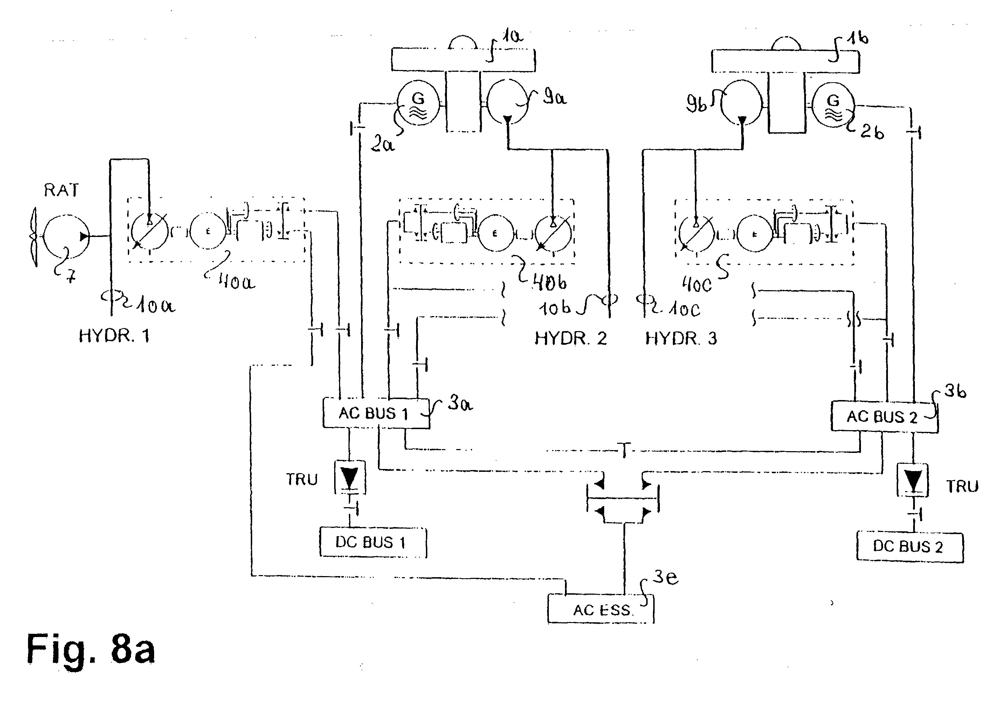

In der Ausführung als elektronischer Regler beinhaltet der erste Regler 17a zwei Sonderbeschaltungsmöglichkeiten:
a) Die erste Beschaltungsmöglichkeit dieses elektronischen Druckreglers ist eine "Startbeschaltung" der Pumpe, um aus dem Stillstand des bidirektionalen Leistungswandlersystems heraus dieses schnell (das heißt: belastfrei) hochfahren zu können. In einer Anlaufphase, welche die Betriebsmodus-Logik der Steuereinheit 26 vorgibt, wird die Schrägscheibe 15b solange auf Nullhubstellung und damit lastfrei belassen, bis näherungsweise eine Synchrondrehzahl der elektrischen Maschine 20 des elektrischen Teilsystems 13 erreicht ist. Erst danach wird der erste Regler 17a auf den gewünschten Druck p₀ einregeln.
b) Die zweite Beschaltungsmöglichkeit dieses elektronischen Druckreglers betrifft die Solldruckvorgabe (das heißt: Regeldruckvorgabe). Der Solldruck kann entweder einen konstanten Wert besitzen, der dem Nenndruck p₀ der (in den Figuren 8a bis 8c gezeigten) triebwerkgetriebenen Hauptpumpen (Hydraulikpumpen 9a bis 9d) entspricht. Diese Solldruckvorgabe, die einer (sogenannten) "flat cut off"-Charakteristik einer Hydraulikpumpe 9a bis 9d entspricht, wird im ersten Regler 17a über die Betriebsmodus-Logik der Steuereinheit 26 dann vorgegeben, wenn das bidirektionale Leistungswandlersystem als unterstützende Spitzenbedarfs-Hydraulikpumpe bei parallel arbeitender Primärpumpe (primärer Hydraulikpumpe 9a, 9b, 9c, 9d) arbeiten soll.

Der Solldruck p₀ kann - alternativ dazu - auch in Abhängigkeit des Pumpen-Fördervolumenstroms verändert werden, entsprechend der (sogenannten) "soft cut-off"-Charakteristik druckgeregelter Pumpen. Diese Solldruckvorgabe wird im ersten Regler 17a über die Betriebsmodus-Logik der Steuereinheit 26 vorzugsweise dann vorgegeben, wenn das bidirektionale Leistungswandlersystem als alleinige oder Ersatz-Hydraulikpumpe für ausgefallene Primärpumpe(n) 9a, 9b, 9c, 9d] in das Hydrauliksystem Kydraulikleistung einspeist und die dafür notwendige maximale Motorleistung stärker begrenzt werden soll.

Das elektrische Teilsystem 13 nach der Fig. 4a besteht im wesentlichen aus der elektrischen Maschine 20, aus dem zweiten Betriebsarten-Schaltelement 21 und der elektronischen Einheit 22. Die elektrische Maschine 20 kann beispielsweise als eine Drehstrom-Synchronmaschine ausgeführt werden, die im System als elektrischer Motor oder Generator arbeitet. Weiterhin wird das zweite Betriebsarten-Schaltelement 21 mit einer Polumschalteinrichtung ausgeführt. Dabei sind die Anschlüsse der elektronisch / elektrisch regelbaren Geräteteile der Synchronmaschine und der Polumschalteinrichtung (allgemein) an einen Spannungs-Regler angeschlossen. Die elektronische Einheit 22 wird durch einen bekannten Leistungselektronikteil, der aus den in der nachgenannten Reihenfolge genannten und elektrisch in Reihe geschaltenen Elementen: Gleichrichter, Wechselrichter und Filterausgangsstufe besteht, verkörpert. Die (Drehstrom-)Anschlüsse der Synchronmaschine sind mit den (Drehstrom-)Anschlüssen (den Fußkontakten des Umschaltgliedes) der Polumschalteinrichtung 21 verbunden. Die eingangsseitigen Hauptanschlüsse des Gleichrichters (des Leistungselektronikteiles) sind einem der (Drehstrom-)Kontakte des mehrpoligen Umschaltgliedes der Polumschalteinrichtung 21 angeschlossen.

Den anderen (Drehstrom-)Kontakten der mit mindestens zwei Stellungen versehenen Polumschalteinrichtung 21 sind die Leiteranschlüsse einer (Dreh-)Stromverbindung angeschlossen, die - sich durch einen ersten (Drehstrom-)Schalter 23a abschalten läßt und - mit einer ersten elektrischen (Drehstrom-)Sammelschiene 3a elektrisch verbunden ist. Derart sind auch die ausgangsseitigen Hauptanschlüsse der Filterausgangsstufe (des Leistungselektronikteiles) mit einer (Drehstrom-)Verbindung verbunden, die sich durch einen zweiten (Drehstrom-)Schalter 23b abschalten läßt und mit einer zweiten elektrischen (Drehstrom-)Sammelschiene 3b elektrisch verbunden ist. Die beiden (Drehstrom-)Schalter 23a, 23b können einander auch identisch sein, wenn der Anschluß nur an eine Sammelschiene 3a identisch mit 3b erfolgt.

Falls die elektrische Maschine 20 als Motor am elektrischen Netz betrieben werden soll, kann es vorteilhaft sein, daß die elektronische Einheit 22 (Leistungs- und Regelelektronik), die in diesem Anwendungsfall aus der Gleichrichter- und Wechselrichterstufe bestehen soll. dermaßen zu nutzen. um eine kontrollierte (geregelte) Anlaufphase der elektrischen Maschine 20 sicherzustellen. In diesem Fall müßte die Funktionsreihenfolge von Gleich- und Wechselrichter umgeschaltet werden. Die Gleichrichterstufe würde demzufolge vom elektrischen Energiesystem gespeist werden. während der Wechselrichter an die elektrische Maschine 20 angeschlossen ist.

Weiterhin wird (an dieser Stelle) erwähnt, daß die elektrische Maschine 20 und / oder das elektrische Bordnetz 3 nicht notwendigerweise für (dreiphasigen) Drehstrom ausgeführt sein muß. Auch eine beliebige - beispielsweise einphasige - als Motor und Generator einsetzbare elektrische Maschine 20 ist denkbar.
Falls die elektrische Maschine 20 und das Bordnetz 3 nicht aufeinander abgestimmt sind, muß die elektronische Einheit 22 im Pumpenmodus in umgekehrter Richtung (wie oben für einen kontrollierten Anlauf beschrieben) als Regel- und Kommutierungselektronik für die als Motor arbeitende elektrische Maschine 20 geschaltet sein.
Ein Betrieb am (ein- oder mehrphasigen) Wechselspannungsnetz ist auch (bei nicht großer Leistung der elektrischen Maschine 20) direkt möglich, also ohne den Einsatz einer (sonst ggf. bidirektional arbeitenden) elektronischen Einheit 22.
Bei Betrieb am Gleichspannungsnetz wird der Wechselrichter im Generatormodus (mittels Umschalter) umgangen. Der Wechselrichter ist allenfalls zur elektronischen Kommutierung im Motorbetrieb der elektrischen Maschine 20 erforderlich, und kann bei mechanischer Kommutierung gänzlich entfallen.

Durch die Polumschalteinrichtung 21, die
* der elektrischen Maschine 20 [(Drehstrom-)Synchronmaschine] (Drehstrom-)Leistung (aus dem elektrischen Energiesystem) zuleitet oder
* die (Drehstrom-)Leistung, die die elektrische Maschine 20 abführt, (über die elektronische Einheit 22) der (zweiten) elektrischen (Drehstrom-)Sammelschiene 3b (und damit dem elektrischen Energiesystem) zuführt,
arbeitet die elektrische Maschine 20 im elektrischen Teilsystem 13:
a) entweder als Motor (die Polumschalteinrichtung 21 besitzt die in der Fig. 4a gezeichnete, obere Schaltstellung), wenn über den ersten Schalter 23a von der ersten Sammelschiene 3a elektrische Leistung entnommen wird.
   oder
h) als (Drehstrom-)Generator konstanter effektiver Spannung U und konstanter Frequenz f, wenn die Welle 14 oder das Getriebe die elektrische Maschine 20 (das elektrische Teilsystem 13) antreibt und über den (zweiten) Schalter 23b elektrische Leistung auf die (zweite) Sammelschiene 3h speist.

Diese nach b) vorgenannte Betriebsart und der eingenommene Schaltzustand der Polumschalteinrichtung 21 [die (Drehstrom-)Kontakte des mehrpoligen Umschaltgliedes, die mit den eingangsseitigen Hauptanschlüssen des Gleichrichters verbunden sind, und die mittels je einem Schaltglied, das separat dem betreffenden Fußkontakt leitfähig und drehbeweglich befestigt ist, geschlossen sind] entspricht dem bekannten Funktionsprinzip eines elektrischen Systems zur Erzeugung konstanter Spannung und Frequenz bei variabler bzw. schwankender Antriebsdrehzahl n_{E} (engl. VSCF: variable speed constant frequency).

Zur Vervollständigung ist in Fig. 4a noch der vorerwähnte Spannungsregler (U-Regler) eingezeichnet, der zum bekannten Generatorprinzip gehört.

Diese beiden hydraulischen und elektrischen Teilsysteme 12, 13 sind über das Getriebe, vorzugsweise über die genannte Welle 14, mechanisch verbunden, um - "unter Leistungsgewichts-Gesichtspunkten" - die Motordrehzahl n_{H} (der hydraulischen Maschine 15) im Verhältnis zur Antriebsdrehzahl n_{g} (der elektrischen Maschine 20) im Bereich bestmöglicher Teilwirkungsgrade der beiden Maschinen bei Nennleistung aufeinander abzustimmen.

Die Betriebsart-Steuerung dieses bidirektionalen Leistungswandlersystems erfolgt durch die (- nach der Fig. 4 - vorbeschriebene und) der Steuereinheit 26 integrierte Betriebsmodus-Logik (elektrische bzw. elektronische Logik). Sie erfaßt und verarbeitet die ihr zugeleiteten Sensorsignale 24a, 24b, 24c, die den sensitiv erfaßten Meßgrößen, die innerhalb des hydraulischen und elektrischen Energiesystems des Flugzeuges ermittelt werden, entsprechen. Danach werden wenigstens der Druck des hydraulischen Mediums auf den Druckleitungen 98 des hydraulische Leitungssystems 10 und die elektrische Spannung auf den elektrischen Sammelschienen 3a, 3b des elektrischen Verteilungssystems 3 mit Hilfe (nicht gezeigter) Sensoren erfaßt; und in ein druckabhängiges Sensorsignal 24a und in mindestens ein spannungsabhängiges Sensorsignal 24b, 24c umgesetzt. Die Betriebsmodus-Logik wandelt die Sensorsignale 24a, 24b, 24c in logische Schaltsignale 25 zur Ansteuerung der Betriebsarten-Schaltelemente 18, 21 (diversen Umschalteinrichtungen) in den beiden Teilsystemen 12, 13, um entweder den Pumpen- oder den Generator-Betriebsmodus herzustellen.

Diese Betriebsarten-Logik kann vorteilhafterweise eine (nicht gezeigte) Automatik-Schaltung besitzen, die das bidirektionale Leistungswandlersystem bei Druckverlust im hydraulischen Energiesystem (des Flugzeuges) oder bei Spannungsabfall auf den betreffenden Sammelschienen 3a, 3b des elektrischen Verteilungssystems 3 entsprechend aktiviert. Außerdem besteht die Möglichkeit, daß (allgemein: ein Bediener bzw.) der im Cockpit 99 befindliche Pilot der Betriebsmodus-Logik diverse Informationen für Testbeschaltungen und / oder zur Abschaltung von deren Automatik-Schaltung adressiert, die die Betriebsmodus-Logik als Eingangssignal(e) 27 registriert und dementsprechend verarbeitet. Weiterhin werden in dieser Betriebsmodus-Logik vorteilhafterweise auch (in der Fig. 4a nicht mit dargestellte) Meßsignale aus dem bidirektionalen Leistungswandlersystem verarbeitet, die der Überwachung des hydraulischen und /oder des elektrischen Teilsystems auf korrekte Funktion dienen. Danach wird bei Abweichungen oder unzulässigen System-Werten dieser Meßparameter die Automatik-Schaltung außer Kraft gesetzt und das gesamte System abgeschaltet.

Mit diesem bidirektionalen Leistungswandlersystem ist es (nach der Fig. 4a) demnach beispielsweise möglich:
* im Generatorbetrieb: hydraulische Energie in elektrische Energie zu wandeln und auf die (zweite) Sammelschiene 3b zu speisen, deren primäre elektrische Quelle(n) [(sogenannte) Primärleistungsquelle(n)] bzw. Primärgenerator(en) 2] entweder ausgefallen ist (sind) oder die Versorgung aller elektrischer Verbraucher durch die zugeordnete(n) Sammelschiene(n) 3h nicht (mehr) hinreichend zufriedenstellend realisiert. Das Fahrzeug besitzt hierzu mindestens ein (hier nicht gezeigtes) Triebwerk 1 im funktionstüchtigen Zustand.
* im Pumpenbetrieb: elektrische Energie von einer intakten elektrischen Sammelschiene 3a zu beziehen und (nach deren Wandlung über die wellenmechanische Verknüpfung der elektrischen Maschine 20 mit der hydraulischen Maschine 15) als hydraulische Energie in das hydraulisches Leitungssystem 10 einzuspeisen.

Das bidirektionale Leistungswandlersystem ist stets mit einem bestimmten hydraulischen Bordsystem verbunden; auf der elektrischen Seite können es je nach Bedarf und Anwendungsfall eine oder mehrere verschiedene Sammelschienen (3a, 3b) sein, die mit elektrischen Schaltern 23a, 23b (je nach Bedarf) abschaltbar sind.

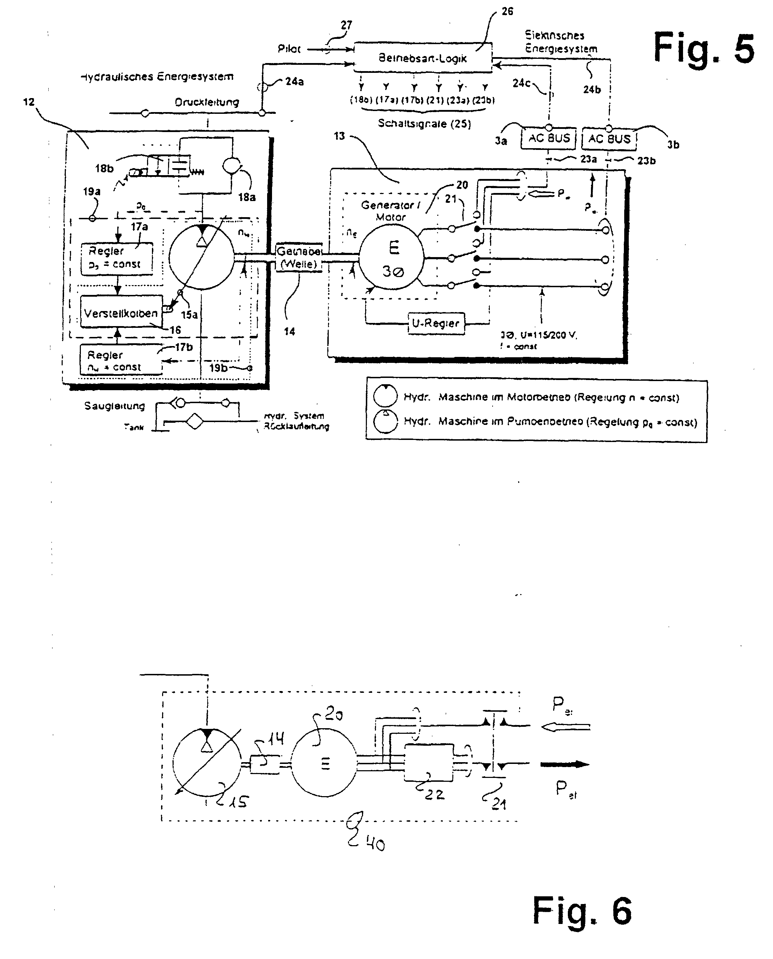

In der Fig. 5 wird eine weitere Ausführungsform des bidirektionalen Leistungswandlersystems vorgestellt. Hier beinhaltet das elektrische Teilsystem 13 (im Gegensatz zu den Figuren 4 und 4a) keine elektronische Einheit 22 (keinen Leistungselektronikteil), der zur Erzeugung einer stabilen Frequenz auch bei schwankender Wellendrehzahl der Welle 14 dient. Diese vereinfachte Lösung des Leistungswandlersystems ist dann vorteilhaft, wenn sichergestellt werden kann, daß die Drehzahlregelung der hydraulischen Maschine 15 (des Hydromotors) auch bei stark wechselnder Belastung hinreichend genau ist, um den Anforderungen an die Frequenzgenauigkeit der erzeugten Ausgangsspannung zu genügen.

Alle anderen vorgenannten und insbesondere anhand der Fig. 4a beschriebenen Merkmale des bidirektionalen Leistungswandlersystems treffen für diese Ausführung nach Fig. 5 gleichermaßen zu.

Die Fig. 6 zeigt in vereinfachter schematischer Darstellung ein definiertes (hier beschriebenes) bidirektionales Leistungswandler-System 40, wie auch vorausgehend beschrieben und in Figuren 4a bzw. 5 ausführlich dargestellt wurde. Es wird in dieser Architektur zur Erläuterung weiterer Ausführungsformen bezüglich der Bordenergie-Systemgestaltung benutzt.
Die elektronische Einheit 22 (Leistungs- und Regelelektronik) ist optional, wenn die Reglung der hydraulischen Maschine 15 (als Hydromotor betrieben) im Generator-Modus die Anforderung für eine hinreichend genaue und stabile Ausgangsfrequenz der (als Generator betriebenen) elektrischen Maschine 20 sicherstellt.

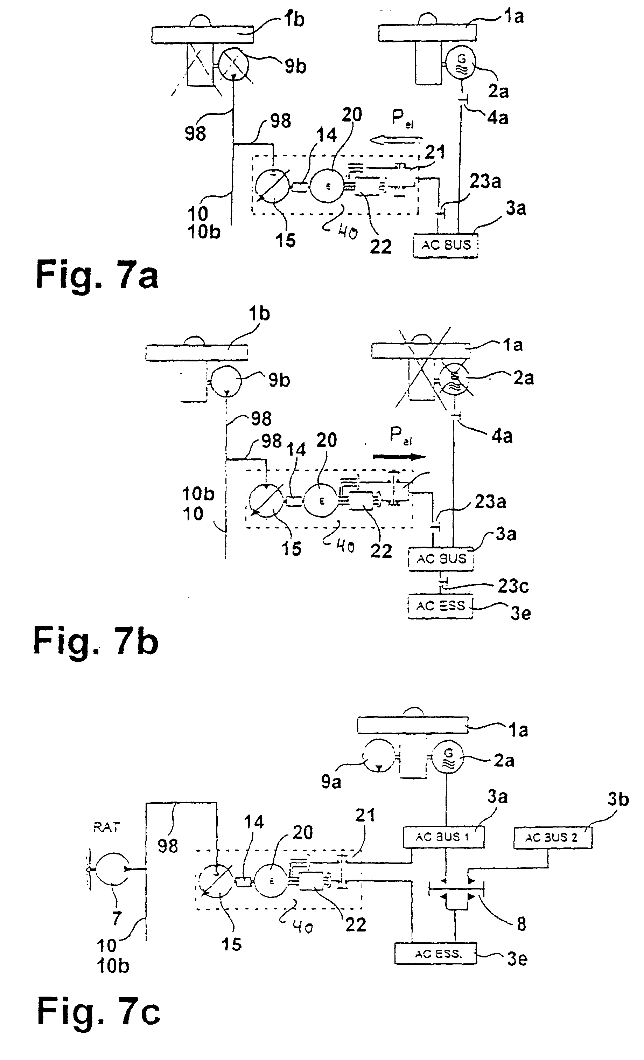

Durch das definierte (identische) bidirektionale Leistungswandler-System 40 wird dessen wahlweise Verwendung nach den Figuren 7a und 7b:
- als Ersatz der monofunktionalen, elektrisch angetriebenen [und den (nach den Figuren 1 bis 3) bekannten unabhängigen hydraulischen Systemen 11a, 11b, 11c integrierten] Hydraulikpumpen, die durch das definierte Leistungswandlersystem 40 für den Stand- bzw. Bodenbetrieb bei abgestelltem(n) Triebwerk(en) 1a oder 1b und / oder als Hilfs- bzw. Alternativpumpe zur Unterstützung bzw. Sicherung des Bedarfs an hydraulischer Leistung im Fahrt- bzw. Flugbetrieb bei ggf. ausgefallenem(n) Triebwerk(en) 1a oder 1b bzw. (genauer) ausgefallener triebwerksgetriebener primärer Hydraulikpumpe 9b am Triebwerk 1b, wie in Fig. 7a dargestellt, und
- als Ersatz der monofunktionalen, hydraulisch angetriebenen [und den (nach den Figuren 1 bis 3) bekannten (mit CSMG bezeichneten bzw. den als Notstrom-Generator arbeitenden) Geräten 6 integrierten] Generatoren durch das Leistungswandlersystem 40 zur Versorgung einer elektrischen Sammelschiene (AC BUS) und Abdeckung der Zustände erhöhten Leistungsbedarfs auf dieser Sammelschiene ; oder zur Versorgung der bekannterweise (dem elektrischen Verteilungsnetz 3 integrierten und mit AC ESS bezeichneten) Sammelschiene, die besonders kritische Verbraucher mit elektrischer Energie beliefert, weil ein Risiko des Ausfalles der triebwerksgetriebenen Generatoren 2a, 2b, 2c, 2d oder einzelner (mehrerer) Sammelschienen 3a, 3b, 3c, 3d oder eines (mehrerer) Triebwerk(e)s 1a, 1b, 1c, 1d insbesondere bei einem Flugzeug immer besteht, wie in Fig. 7b dargestellt,
deutlicher.

Nach der Fig. 7a bestehen demnach [mit dem schaltungsmäßig berücksichtigten definierten bidirektionalen Leistungswandlersystem 40] folgende elektrische Verbindungen:

Der erste triebwerksgetriebene (Drehstrom-)Generator 2a (als eine der elektrischen Primärleistungsquellen) ist mit der ersten (durch den ersten Schalter 4a abschaltbaren) (Drehstrom-)Sammelschiene 3a (AC BUS) elektrisch verbunden, der eine (Drehstrom-)Leitung, welche mit einem weiteren (dem definitiven bidirektionalen Leistungswandlersystem 40 integrierten) Betriebsart-Schaltelement 21 (nach der Fig. 5) verbunden ist, angeschlossen ist, demzufolge das definierte bidirektionale Leistungswandlersystem 40 über diese [durch den ersten (Drehstrom-) Schalter 23 abschaltbare] Leitungsverbindung mit elektrischer Energie vorsorgt werden kann. Der hydraulischen Maschine 15 des Leistungswandlersystems 40 ist eine Druckleitung 98 angeschlossen, über die, bei Ausfall der triebwerksgetriebenen Hydraulikpumpe 9b (oder des Triebwerkes 1b) hydraulische Energie in das hydraulische System 10 transferiert wird.

Die Schaltung nach der Fig. 7b berücksichtigt außerdem die mit AC ESS bezeichnete (Drehstrom-) Sammelschiene 3e, wobei eine der (Drehstrom-)Sammelschiene 3a (AC BUS) angeschlossene (zusätzliche und durch einen zusätzlichen Schalter 23c freischaltbare) (Drehstrom-)Leitung mit der AC ESS - bezeichneten (Drehstrom-)Sammelschiene 3e verbunden ist. Dabei wird durch die triebwerksgetriebene primäre Hydraulikpumpe 9b über die Druckleitung(en) 98 hydraulische Energie entnommen, die die hydraulische Maschine 15 antreibt. Nach dem (bezüglich der Figuren 4 und 4a) vorbeschriebenen Vorgang bidirektionaler Wandlung der hydraulischen Energie in elektrische Energie wird die ausgangs dem Betriebsart-Schaltelement 21 (nach Fig. 5) anliegende elektrische Energie der (Drehstrom-)Sammelschiene 3a (AC BUS) eingespeist, welche der (Drehstrom-)Sammelschiene 3e (AC ESS) zugeleitet wird. Dabei ist der Leitungsweg infolge eines angenommenen Ausfalls des ersten triebwerksgetriebenen Drehstrom-Generators 2a (energiebezogenen) gestört.

Der Einsatz des nach Fig. 6 beschriehenen definierten bidirektionalen Leistungswandlersystems 40 anstelle
- einer monofunktionalen, elektrisch angetriebenen Hydraulikpumpe [des (nach den Figuren 1 bis 3) bekannten unabhängigen hydraulischen Systems 11a]
- als auch eines monofunktionalen, hydraulisch angetriebenen [und (nach den Figuren 1 bis 3) bekannten (mit CSMG bezeichneten bzw. als Notstrom-Generators arbeitenden) Gerätes 6

in hydraulischen Systemen, die bekanntermaßen primär von einer triebwerksgetriebenen Hydraulikpumpe 9a bis 9d gespeist werden und mit denen eine Alternativ- bzw. Notenergiequelle, beispielsweise: eine Stauluftturbine (RAT.) mittels einer ihr gekoppelten hydraulischen Pumpe 7 hydraulische Energie transferieren kann, die über [den (sogenannten Not-)Generator] des als CSMG-bezeichneten Gerätes 6 auch elektrische Energie umsetzt [vergleiche dazu: zweites hydraulisches Leitungssystem 10b (nach Fig. 1)], zeigt - im Vergleich der (nach der Fig. 7c) vorgestellten Lösung - deren besonderen Vorteil, den der Ersatz der (monofunktionalen, elektrisch angetriebenen Hydraulikpumpe bzw. des monofunktional, hydraulisch angetriebenen CSMG-Gerätes 6) genannter Mittel durch das definierte Leistungswandlersystem 40 erbringen wird. Dieser Vorteil besteht darin, daß - je nach Betriebsmodus-Beschaltung [durch die Schaltstellung des (zweiten) Betriebsarten-Schaltelementes 21)] - das Leistungswandlersystem 40 wahlweise als Primärpumpe oder als Notgenerator arbeitet.

Die Schaltung nach der Fig. 7c berücksichtigt, daß die hydraulische Maschine 15 des definierten Leistungswandlersystems 40 mit einer Druckleitung 98 verbunden ist, die an die hydraulische Pumpe 7, die mit der Stauluftturbine (RAT) mechanisch gekoppelt ist, angeschlossen ist. Das zweite Betriebsatten-Schaltelement 21 des Leistungswandlersystem 40 ist separat mit der ersten (Drehstrom-)Sammelschiene 3a und mit der kritische elektrische Verbraucher versorgende) (Drehstrom-)Sammelschiene 3e (AC ESS) verbunden. Ein (einpolig dargestellter) elektrischer Mehrwegeschalter 8 besitzt vier elektrische Anschlüsse, wobei zwei Anschlüssen eine Leitungsbrücke angeschlossen ist. Der Leitungsbrücke ist eine elektrische Leitungsverbindung angeschlossen, die mit der (Drehstrom-)Sammelschiene 3e (AC ESS verbunden ist. Den verbleibenden Anschlüssen sind separat Leitungsverbindungen angeschlossen, die mit der ersten und der zweiten Drehstrom-Sammelschiene 3a und 3b verbunden sind.

Die erste elektrische (Drehstrom-)Sammelschiene 3a ist mittels einer (abschaltbaren) Leitungsverbindung mit dem triebwerkgetriebenen Generator 2a verbunden. Danach bestehen die folgenden Möglichkeiten, nach denen (bei entsprechender Betriebsmodus-Beschaltung) die stauluftturbinengetriebene hydraulische Pumpe 7 der hydraulischen Maschine 15 hydraulische Energie transferiert, die - wie vorbeschrieben - das bidirektionale Leistungswandlersystem 40 in elektrische Energie umsetzt, mit der die Sammelschiene 3e und auch - bei entsprechender Schaltstellung des Mehrwegeschalters 8 - die Sammelschiene 3a oder 3b - bei möglichem Ausfall des Generators 2a versorgt werden. Fehlt es dem zentralen Hydrauliknetz an hydraulischer Energie, dann wird (bei entsprechender Betriebsmodus-Beschaltung) die vom triebwerksgetriebenen Generator 2a bezogene elektrische Energie über die entsprechende Sammelschienen-Verbindung 3a oder 3e - wie vorbeschrieben - dem definierten bidirektionalen Leistungswandlersystem 40 eingespeist. Die elektrische Maschine 20 wandelt die elektrische Energie in mechanische Drehbewegung, die über die Welle 14 oder das Getriebe auf die gekoppelte hydraulische Maschine 15 übertragen wird. Infolge dessen transferiert die hydraulische Maschine 15 hydraulische Energie in das zentrale Hydrauliknetz 10.

Es ist einleuchtend, daß in mehrfach redundanten hydraulischen und elektrischen Gesamt-Bord-Energiesystemen von Fahrzeugen (aller Art), insbesondere Flugzeugen, anwendungsfallbezogen auch Kombinationen dieser vorgenannten Grundprinzipien zur Verwendung des beschriebenen bidirektionalen Leistungswandlersystems angewandt werden können, um die bekannten Nachteile der Systemkonzepte nach den Fig. 1 bis 3 abzustellen.

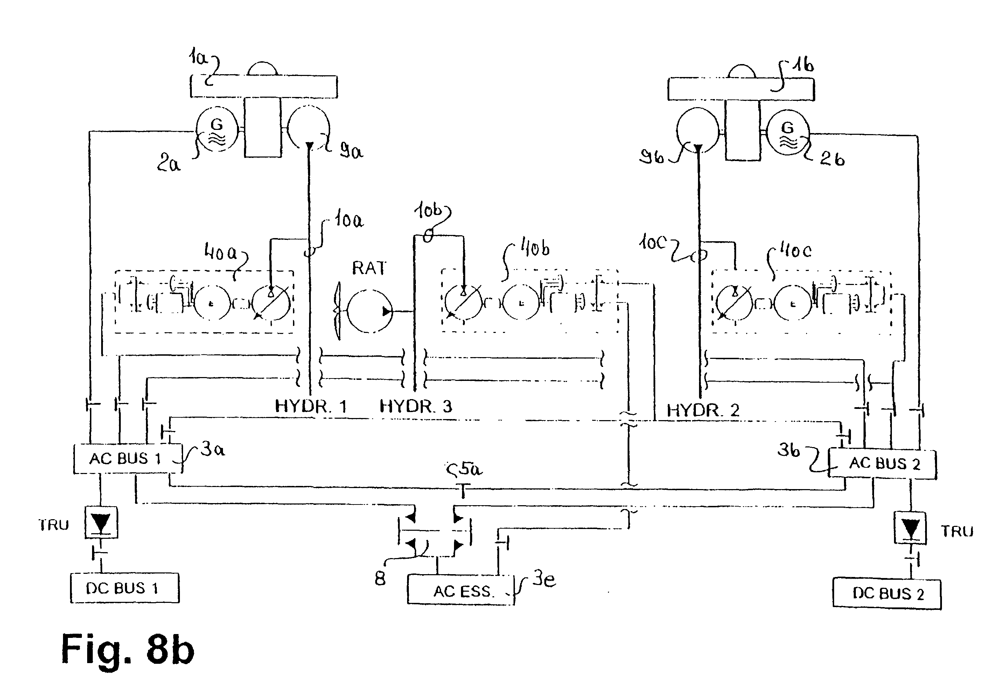

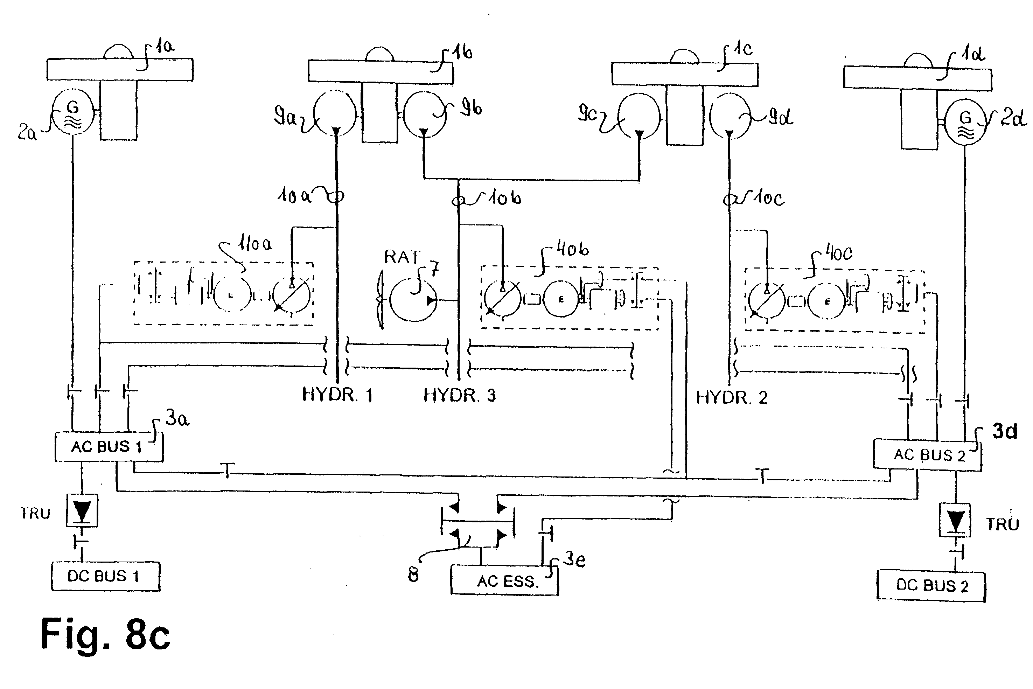

Die System-Schemata nach den Fig. 8a, 8b, 8c zeigen beispielhafte Alternativen zu den bekannten typischen Systemlösungen nach Figuren 1 bis 3 auf, wie sie durch die Verwendung bidirektionaler Leistungswandlersysteme veränderbar sind.

Nach der Fig. 8a sind - gegenüber der Lösung nach der Fig. 3 - alle elektrisch getriebenen Hydraulikpumpen der (nach den Figuren 1 bis 3) bekannten unabhängigen hydraulischen Systeme 11a, 11b sowie die hydraulische Leistungstransfereinheit 121 (PTU) durch die Leistungswandlersysteme 40a, 40b, 40c ersetzt. Diese besitzen alle gleichzeitig die Funktion eines elektrischen Alternativ- bzw. Not-(Drehstrom-)Generators.

Der Zusatzvorteil besteht in der Einsparung einer konventionellen Maschine, in diesem Fall des CSMG-bezeichneten Gerätes 6 (mit integriertem Notstrom-Generator)- im Vergleich der Lösung nach Fig. 3 -, bei deutlich verbesserter Verfügbarkeit (das heißt: reduzierter Ausfallwahrscheinlichkeit) elektrischer Leistung.

Gleichzeitig ist es möglich, im Fahrt- oder Flugbetrieb und bei erhöhtem bzw. Spitzenbedarf an Leistung entweder
- auf den elektrischen Sammelschienen 3a, 3b: die bidirektionalen Leistungswandlersysteme 40b, 40c als Hilfsgeneratoren zu betreiben, wobei die Leistung den entsprechenden hydraulischen Systemen 1Ob, 10c entnommen wird
   oder
- in den hydraulischen Systemen 1Ob, 10c die bidirektionalen Leistungswandlersysteme 40b, 40c als Hilfspumpen zu betreiben, wobei die Leistung den entsprechenden elektrischen Sammelschienen 3a, 3b entnommen wird.

Diese Lösungs-Varianten sind dann vorteilhaft anwendbar, wenn der Spitzenbedarf an elektrischer und hydraulischer Leistung durch die entsprechenden Verbrauchersysteme im Normalbetrieb nicht gleichzeitig auftritt. So ist es möglich, hydraulische bzw. elektrische Leistung bereitzustellen, die von den Primärenergiequellen (Hydraulikpumpen 9a, 9b bzw. Generatoren 2a, 2b) nicht aufgebracht werden kann. Andererseits ist es möglich, diese über die bidirektionalen Leistungswandlersysteme 40b, 40c erzeugbare elektrische bzw. hydraulische Leistung bei der Systemauslegung für die elektrischen bzw. hydraulischen Energiesysteme bereits zu berücksichtigen. Der Vorteil ist dann die entsprechend mögliche Reduktion der zu installierenden Nennleistungen der Primärgeneratoren 2a, 2b und Primärpumpen 9a, 9b hei gleichem Spitzenleistungsbedarf, das heißt: gleichem Gewicht und Kosten.

Nach der Fig. 8b sind alle elektrisch getriebenen Pumpen 11a bis 11c (nach Fig. 2) durch bidirektionale Leistungswandlersysteme 40a bis 40c ersetzt. Gleichzeitig ist hier pro Triebwerk 1a, 1b nur eine Primärpumpe 9a, 9b etwa doppelter Nennleistung, das heißt: doppeltem Fördervolumenstrons, gegenüber der bekannten Systemlösung nach Fig. 2 installiert. Die Triebwerkbelastung durch entnommene Wellenleistung zum Antrieb der Pumpen und Generatoren ändert sich hierbei nicht.

Alle Leistungswandlersysteme 40a bis 40c können entweder als elektrisch getriebene Pumpen oder als Alternativ- bzw. Notstromgenerator betrieben werden.

Die Vorteile einer solchen Systemlösung mit bidirektionalen Leistungswandlersystemen 40a bis 40c nach Fig. 8b gegenüber der bekannten Vergleichslösung nach Fig. 2 sind folgende:
- es stehen zwei hydraulische Systeme 1Oa, 10b mit vergleichsweise doppelter hydraulischer Leistung zur Verfügung; in dem bekannten System nach Fig. 2 steht nur das mittlere hydraulische System 10b mit dieser Leistung zur Verfügung;
- es wird (bei einem typischen Flugzeug) die Verrohrung und damit das Gewicht der Installation eines hydraulischen Systems 1Ob nach Fig. 2 vom zentralen Fahrwerkschacht zu den beiden triebwerkgetriebenen Pumpen 9b, 9c eingespart;
- das CSMG-Gerät 6 (der Notstromgenerator) nach Fig. 2 kann eingespart werden;
- die Verfügbarkeit elektrischer bzw. hydraulischer Leistung ist durch die bidirektionalen Leistungswandlersysteme 40a bis 40c deutlich verbessert, das heißt: deren Ausfallwahrscheinlichkeiten reduziert;
- gleichzeitig (und auch wie im Zusammenhang mit der Systemlösung nach Fig. 8a bereits erläutert) ist es möglich, erhöhten bzw. Spitzenleistungsbedarf in bestimmten Flugphasen auf den elektrischen Sammelschienen oder in den hydraulischen Systemen durch entsprechende Aufschaltung der Leistungswandlersysteme 40a bis 40c abzudecken oder diese Möglichkeit bereits in der Systemauslegung zu nutzen, um durch geringere installierte Nennleistungen von Pumpen bzw. Generatoren entsprechendes Gewicht und Kosten einzusparen.

Nach der Fig. 8c sind alle elektrisch getriebenen Pumpen 11a bis 11c (nach der Fig. 1) durch bidirektionale Leistungswandlersysteme 40a bis 40c ersetzt. Gleichzeitig sind hier auf nur zwei Triebwerken 1a, 1d je ein Generator 2a, 2d etwa doppelter Nennleistung (gegenüber der typischen bekannten Lösung nach Fig. 1) installiert. Auf den beiden anderen Triebwerken 1b, 1c sind je zwei Pumpen 9a, 9b bzw. 9c, 9d montiert. Die Triebwerkbelastung durch entnommene Wellenleistung zum Antrieb der Pumpen und Generatoren ändert sich hierbei nicht gegenüber der bekannten Systemlösung nach der Fig. 1.

Alle Leistungswandlersysteme 40a bis 40c können entweder als elektrisch getriebene Pumpen oder als Alternativ- bzw. Notstromgenerator betrieben werden.

Die Vorteile einer solchen Systemlösung mit bidirektionalen Leistungswandler-Systemen 40a bis 40c (nach Fig. 8c) gegenüber der bekannten Vergleichslösung nach Fig. 1 sind:
- es werden bei gleichen verfügbaren elektrischen bzw. hydraulischen Nennleistungen auf den elektrischen Sammelschienen 3a, 3d bzw. in den Hydrauliksystemen 10a bis 10c die Verrohrungen für zwei Pumpen zwischen dem inneren und äußeren Triebwerk sowie (bei einem typischen Flugzeug) die Kabelverlegung für zwei Generatoren aus dem Rumpf zu den innenliegenden Triebwerken 1b, 1c eingespart, somit Gewicht und Kosten eingespart;
- das CSMG-Gerät 6 (der Notstromgenerator) nach Fig. 1 kann eingespart werden:
- die Verfügbarkeit elektrischer bzw. hydraulischer Leistung ist durch die bidirektionalen Leistungswandlersysteme 40a bis 40c deutlich verbessert, das heißt: die Ausfallwahrscheinlichkeiten der beiden Leistungsarten reduziert;
- gleichzeitig (und wie im Zusammenhang mit den Systemlösungen nach den Figuren 8a und 8b bereits erläutert) ist es möglich, erhöhten bzw. Spitzenleistungsbedarf in bestimmten Betriebsphasen auf Sammelschienen oder in den hydraulischen Systemen durch entsprechende Aufschaltung der Leistungswandlersysteme 40a bis 40c abzudecken oder diese Möglichkeit bereits in der Systemauslegung zu nutzen, um durch geringere installierte Nennleistungen von Haupt-Pumpen bzw. -Generatoren entsprechend Gewicht und Kosten einzusparen.

Zusammenfassend wird ergänzt, daß mit dem bidirektionalen Leistungswandler-System ein Energiekonvertierungssystem zwischen hydraulischer und elektrischer Notversorgung vorgestellt wird, das sich allgemein im Fahrzeugbau einsetzen läßt - und sich nicht nur für seinen Einsatz in Flugzeugen zur Erreichung der beschriebenen Vorteile eignet. Das vorgestellte bidirektional arbeitende Leistungswandler-System kann demnach die Funktionen heutiger zumeist (im Flugzeugbau eingesetzter) elektrisch getriebener Hydraulikpumpen sowie hydraulisch-elektrischer Alternativ- oder Notstrom-Generatoren übernehmen.

Allgemein besteht das System aus einem Hydraulikmotor, der auch als Pumpe betrieben werden kann, und einem mittels Getriebe oder Welle verbundenen elektrischen Generator / Motor. Ein Converter erzeugt im Notstrombetrieb aus der Generator-Drehspannung variabler Frequenz eine Bordspannung konstanter Frequenz. Bei Bedarf an hydraulischer Leistung kann dieser Computer als bordnetzgespeister Umrichter den drehzahlgeregelten Elektromotor versorgen, um die Hydraulikpumpe anzutreiben. Dabei basiert die (gegebenenfalls bidirektional ausgeführte) Steuer- und Umrichterelektronik auf hochintegrierten Leistungshalbleitern. Neben der Umrichterfunktion, die als VSCF-Technologie (VSCF: Variable Speed - Constant Frequency) bei den Generatoren zur Einsparung der hydromechanischen Drehzahlregelung führt, kann die Leistungselektronik auch zur Motorregelung genutzt werden, um bei einem Mehr- oder Notbedarf an hydraulischer Energie einen geregelten Hochlauf der elektrischen Maschine sicherzustellen.

Der Einsatz eines bidirektionalen Leistungswandlersystems ermöglicht elektrische und hydraulische Bordenergie-Architekturen, die im Vergleich der bekannten Systemlösungen unter Einsparungen von Komponenten eine vergleichbare oder höhere Zuverlässigkeit realisieren. Ferner wird man - gegenüber den bekannten Systemlösungen - entsprechend an Gewicht, Komplexität, Wartungsaufwand einsparen und damit auch die Herstellungs- und Betriebskosten senken. Gleichfalls lassen sich derartige bidirektionale Leistungswandlersysteme auch zur Entzerrung von Leistungsbedarfsspitzen einsetzen, demgegenüber bekannte Leistungsmanagement-Konzepte sich entweder nur auf die Energieart beziehen oder für jede Wandlungsrichtung zwischen unterschiedlichen Energiearten eigene Komponenten vorsehen.

Mit dem beschriebenen bidirektionalen Leistungswandlersystem werden elektrische in (mechanische und mechanische in) hydraulische Energiearten (und umgekehrt) an dessen Ein- und Ausgängen und entsprechend dem Energie- bzw. Leistungsbedarf transferiert. Mit Hilfe dieser Lösung inclusive den dazu vorgestellten Ausführungen lassen sich elektrische und hydraulische Not- und Alternativ-Energiequellen technologisch integrieren, die bekanntermaßen (im Flugzeugbau) gegenwärtig durch einzelne Energiewandler (elektrisch betriebene Hydraulikpumpe bzw. hydraulisch angetriebener Notstrom-Generator) realisiert werden.

Einen erhöhten Bedarf an hydraulischer und elektrischer Energie kann man allgemein bei modernen Land-, Wasser- und Luftfahrzeugen vermuten, der zeitlich betrachtet mit der beabsichtigten Ausdehnung der Transportweite und den angestrebten Gewichtsverminderungen eines Fahrzeuges eintreffen wird. Bei modernen Verkehrs- und Transportflugzeuge, insbesondere an Bord von großen Flugzeugen (künftigen Großraumflugzeugen bzw. Mehrfachdeck-Flugzeugen), läßt sich dieser Bedarf absehbar prognostizieren, der mit dem Wachstum der Größe der Flugzeuge überproportional ansteigen wird. Demnach sind zukünftig Energiesysteme umzusetzen, die eine zeitliche und quellenbezogene Entzerrung der Bordnetz-Lastspitzen verwirklichen. Dieser Anspruch läßt sich mit dem vorgestellten und einem modernen Leistungs-Management-System integrierten bidirektionalen Leistungswandlersystem realisieren, da die bekannten Systeme unter Berücksichtigung notwendiger Redundanzen nur jeweils auf die elektrischen und / oder hydraulischen Spitzenleistungen ausgelegt sind.

## Patentansprüche

1. **Leistungswandler-System zur Wandlung unterschiedlicher Energiearten** für die Versorgung von Energiesystemen eines Fahrzeuges, welches bidirektional Leistung zwischen einem hydraulischen und einem elektrischen Bordsystem transferiert, wobei dem hydraulischen Bordsystem hydraulische Quellen (9) zugeordnet sind, die in ein hydraulisches Leitungssystem (10) mit angeschlossenen hydraulischen Verbrauchern einspeisen, und dem elektrischen Bordsystem elektrische Quellen (2) zugeordnet sind, die in ein elektrisches Verteilungssystem (3) mit angeschlossenen elektrischen Verbrauchern einspeisen, wobei das Leistungswandler-system aus einem hydraulischen und einem elektrischen Teilsystem (12, 13) besteht, zwischen denen ein bidirektionaler Leistungstransfer erfolgt, die jeweils eine Maschine (15, 20) aufweisen, deren drehbeweglich gelagerte Maschinenelemente miteinander mechanisch gekoppelt sind, wobei das hydraulische Teilsystem (12) mit dem hydraulischen Leitungssystem (10) und das elektrische Teilsystem (13) mit dem elektrischen Verteilungssystem (3) verbunden ist, **dadurch gekennzeichnet, daß** den beiden Teilsystemen (12, 13) eine Steuereinheit (26) zugeschaltet ist, die auf der Basis des erfaßten und dem hydraulischen Leitungssystem (10) oder dem elektrischen Verteilungssystem (3) zugeordneten Betriebszustandes die Maschinen (15, 20) ansteuert, wodurch damit das entsprechende Setzen oder Schalten eines jeweils den beiden Teilsystemen (12, 13) integrierten Betriebsarten-Schaltelementes (18, 21) erfolgt und eine der beiden bidirektionalen Funktionen der Teilsysteme (12, 13) aktiviert wird.

2. **Leistungswandler-System** nach Anspruch 1, **dadurch gekennzeichnet, daß** die Maschinenelemente der beiden Maschinen (15, 20) durch eine Welle oder ein Getriebe mechanisch gekoppelt sind, um die Drehzahlen der beiden Teilsysteme (12, 13) oder die Wirkungsgrade der Teilsysteme (12, 13) bei Nennleistung aufeinander abzustimmen.

3. **Leistungswandler-System** nach Anspruch 1, **dadurch gekennzeichnet, daß** das hydraulische Teilsystem (12) mit einer hydraulischen Maschine (15) und einem ersten Betriebsarten-Schaltelement (18), die miteinander eine weitere Rohrleitung verbindet, und einer Steuer- und Regeleinheit (17) realisiert ist, wobei dem ersten Betriebsarten-Schaltelement (18) als hydraulisches Element eine andere Rohrleitung, der wenigstens ein Drucksensor (24a) integriert ist, der den Druck des durchströmenden Hydraulikmediums sensitiv erfaßt und über eine ihm und der Steuereinheit (26) angeschlossene weitere Übertragungsleitung letzterer zur weiteren Verarbeitung signalmäßig zuleitet, angeschlossen ist, die mit einer der Druckleitungen des hydraulischen Leitungssystems (10) verbunden ist, und wobei der hydraulischen Maschine (15) eine zusätzliche Rohrleitung angeschlossen ist, die mit einer der tankverbundenen hydraulischen Saugleitungen oder den Rücklaufleitungen des hydraulischen Leitungssystems (10) verbunden ist, und daß der Steuer- und Regeleinheit (17) eine andere Übertragungsleitung angeschlossen ist, die mit einem weiteren Drucksensor verbunden ist, der den Druck des Hydraulikmediums, das die weitere Rohrleitung durchströmt, sensitiv erfaßt und über die andere Übertragungsleitung der Steuer- und Regeleinheit (17) signalmäßig zuleitet, und daß der Steuerund Regeleinheit (17) eine zusätzliche Übertragungsleitung angeschlossen ist, die mit einer der hydraulischen Maschine (15) integrierten Hubvolumenverstellung signalmäßig kommuniziert, und ihr außerdem eine anderweitige Übertragungsleitung angeschlossen ist, die mit einem Drehzahlsensor, der die Drehzahl eines der hydraulischen Maschine (15) drehbeweglich gelagerten Maschinenelementes oder einer mit diesem Maschinenelement fest verbundenen mechanischen Welle (14) sensitiv erfaßt und über die anderweitige Übertragungsleitung der Steuer- und Regeleinheit (17) signalmäßig zuleitet, verbunden ist.

4. **Leistungswandler-System** nach Anspruch 1, **dadurch gekennzeichnet, daß** das elektrische Teilsystem (13) wenigstens mit einer rotierenden elektrischen Maschine (20), die ein anderes drehbeweglich gelagertes Maschinenelement und einen elektrischen Anschlußbereich aufweist, der mit einem zweiten Betriebsarten-Schaltelement (21) als elektrisches Element elektrisch leitend verbunden ist, realisiert ist.

5. **Leistungswandler-System** nach Anspruch 4, **dadurch gekennzeichnet, daß** mit dem zweiten Betriebsarten-Schaltelement (21) die notwendigen Umschaltungen für die Aufnahme oder die Abgabe elektrischer Leistung der elektrischen Maschine (20) vom oder an das elektrische Verteilungssystem (3) durchführbar sind.

6. **Leistungswandler-System** nach Anspruch 4, **dadurch gekennzeichnet, daß** mit dem zweiten Betriebsarten-Schaltelement (21) die elektrische Trennung der ihm angeschlossen elektrischen Verteilungssysteme (3) realisierbar ist.

7. **Leistungswandler-System** nach Anspruch 4, **dadurch gekennzeichnet, daß** das elektrische Teilsystem (13) zusätzlich eine elektronische Einheit (22) umfaßt, die gesondert dem zweiten Betriebsarten-Schaltelement (21) elektrisch angeschlossen ist, infolge dessen die elektrische Maschine (20) mit dem zweiten Betriebsarten-Schaltelement (21) und der elektronischen Einheit (22) eine elektrische Reihenschaltung bilden.

8. **Leistungswandler-System** nach Anspruch 7, **dadurch gekenzeichnet,** daß die elektronische Einheit (22) einen Gleichrichter und einen Wechselrichter und einen elektrischen Filter umfaßt, die in dieser Folge elektrisch in Reihe geschalten sind.

9. **Leistungswandler-System** nach Anspruch 7, **dadurch gekennzeichnet, daß** die elektronische Einheit (22) nur den Gleichrichter und den Wechselrichter umfaßt, die in dieser Folge elektrisch in Reihe geschalten sind, und der Wechselrichter über das zweite Betriebsarten-Schaltelement (21) mit der elektrischen Maschine (20) elektrisch verbunden ist und der Gleichrichter, dem eine elektrischen Verbindung, die mit dem elektrischen Verteilungssystem (3) verbunden ist, geschalten ist, mit elektrische Leistung gespeist wird.

10. **Leistungswandler-System** nach Anspruch 7, **dadurch gekennzeichnet, daß** die elektronische Einheit (22) einen Gleichrichter und einen Wechselrichter umfaßt, die in dieser Folge elektrisch in Reihe geschalten sind, und der Gleichrichter über das zweite Betriebsarten-Schaltelement (21) mit der elektrischen Maschine (20) elektrisch verbunden ist und der Wechselrichter, dem eine elektrischen Verbindung geschalten ist, über letztere elektrische Leistung dem elektrischen Verteilungssystem (3) einspeist.

11. **Leistungswandler-System** nach einem der Ansprüche 9 oder 10. **dadurch gekennzeichnet, daß** dem Wechselrichter wahlweise der elektrische Filter elektrisch nachgeschaltet ist.

12. **Leistungswandler-System** nach den Ansprüchen 4 und 7. **dadurch gekennzeichnet, daß** das zweite Betriehsarten-Schaltelement (21) mit einer mehrpoligen elektrischen Polumschalteinrichtung realisiert ist, wobei der elektrische Anschlußbereich der elektrischen Maschine (20) einem Fußkontakt-Anschlußbereich der Polumschalteinrichtung und Jie elektronische Einheit (22) sowie eine elektrische Sammelschienen-Verbindung auf die betreffende Leistungsflußrichtung bezogen separat getrennten Kontaktabschnitten eines Umschaltkontakt-Anschlußbereiches der Polumschalteinrichtung angeschlossen ist.

13. **Leistungswandler-System** nach Anspruch 4, **dadurch gekennzeichnet, daß** zwischen einem als Steuereingang ausgeführtem Anschlußbereich der elektrischen Maschine (20) und einem dem zweiten Betriebsarten-Schaltelement (21) zugeordneten Anschlußbereich zusätzlich ein Spannungsregler geschalten ist.

14. Leistungswandler-System nach den Ansprüchen 12 und 13, **dadurch gekennzeichnet, daß** der Spannungsregler im besonderen mit einem Anschlußbereich der Polumschalteinrichtung verschalten ist.

15. **Leistungswandler-System** nach den Ansprüchen 8 und 12, **dadurch gekennzeichnet, daß** der Gleichrichter einem separaten betreffenden Kontaktabschnitt des Umschaltkontakt-Anschlußbereiches der Polumschalteinrichtung angeschlossen ist, wobei auch dem elektrischen Filter ein weiterer Anschlußbereich der Polumschalteinrichtung angeschlossen ist.

16. **Leistungswandler-System** nach Anspruch 3, **dadurch gekennzeichnet, daß** die hydraulische Maschine (15) eine verstellbare Verdrängermaschine, vorzugsweise eine Axial-Kolbenmaschine mit integrierter verstellbarer Schrägscheibe (15a) ist, deren Hubvolumen sich durch eine Steuer- und Regeleinheit (17) beeinflussen läßt.

17. **Leistungswandler-System** nach den Ansprüchen 3 und 16, **dadurch gekennzeichnet, daß** die Steuer- und Regeleinheit (17) des hydraulischen Teilsystems (12) mit einem ersten und einem zweiten Regler (17a, 17b) und einer beiden Reglern (17a, 17b) zwischengeschalteten Verstelleinrichtung (16) aufgebaut ist, die in dieser Folge signaltechnisch eine Reihenschaltung ergeben, wobei der erste Regler (17a) über die andere Übertragungsleitung mit dem weiteren Drucksensor und die Verstelleinrichtung (17) über die zusätzliche Übertragungsleitung mit der Schrägscheibe (15a) und der zweite Regler (17b) über die anderweitige Übertragungsleitung mit dem Drehzahlsensor signaltechnisch verbunden ist.

18. **Leistungswandler-System** nach Anspruch 3, **dadurch gekennzeichnet, daß** das erste Betriebsarten-Schaltelement (18) ein Kombi-Ventil ist, das die Funktion zweier parallel geschalteter Ventile (18a, 18b) realisiert, oder eine Ventilgruppe darstellt, die aus der Kombination zweier parallel geschaltener Ventile (18a, 18b) aufgebaut ist.

19. **Leistungswandler-System** nach Anspruch 18, **dadurch gekennzeichnet, daß** die Ventilgruppe aus einem ersten Ventil (18a) und einem zweiten Ventil (18b) zusammengesetzt ist, deren Ventilanschlüsse eingangsseitig einer ersten Verzweigstelle (18c) und ausgangsseitig einer zweiten Verzweigstelle (18d) angeschlossen sind. wobei der ersten Verzweigstelle (18c) die andere Rohrleitung und der zweiten Verzweigstelle (18d) die weitere Rohrleitung angeschlossen ist.

20. **Leistungswandler-System** nach Anspruch 19, **dadurch gekennzeichnet, daß** das erste Ventil (18a) als Rückschlagventil und das zweite Ventil (18b) als schaltbares Sperrventil ausgebildet ist.

21. **Leistungswandler-System** nach den Ansprüchen 18 oder 19, **dadurch gekenzeichnet,** daß das Kombi-Ventil oder die Ventilgruppe in der nicht durch ein Signal aktivierten Grundstellung eines ersten Ventils (18a) die Funktion eines Rückschlagventils realisiert, das den Zufluß von einem hydraulischen Medium aus dem hydraulischen Leitungssystem (10) sperrt, und daß das Kombi-Ventil oder die Ventilgruppe in der durch ein Signal aktivierten Stellung den Zutluß des hydraulischen Mediums aus dem hydraulischen Leitungssystem (10) zur hydraulischen Maschine (15) passieren läßt.

22. **Leistungswandler-System** nach Anspruch 1, **dadurch gekennzeichnet, daß** der Steuereinheit (26) eine Betriebsmodus-Logik integriert ist, die außerdem eine Automatik-Schaltung umfaßt und mit mehreren Übertragungsleitungen verbunden ist, die den druckerfassenden Sensoren angeschlossen sind, die den Leitungen des hydraulischen Leitungssystems (10) integriert sind, um in diesen den Betriebszustand: "ausreichender Druck des hydraulischen Mediums" im hydraulischen Leitungssystem (10) zu erfassen, und die den spannungserfassenden Sensoren angeschlossen sind, die auf dem elektrischen Leitungssystem (3) angeordnet sind, um auf diesen den Betriebszustand: "ausreichende Spannung auf dem elektrischen Verteilungssystem (3) zu erfassen, wobei die betreffenden Betriebszustände der Steuereinheit (26) von den Sensoren signalmäßig zugeführt werden, und daß der Betriebsmodus-Logik überdies mehrere weitere Übertragungsleitungen, die sie zur Übertragung der in Schaltsignale umgesetzten Sensorsignale nutzt, angeschlossen sind, die mit dem hydraulischen Teilsystem (12) und dem elektrischen Teilsystem (13) und mehreren elektrischen Schaltern (23a, 23b), die den mit dem elektrischen Teilsystem (13) verbundenen elektrischen Sammelschienen-Verbindungen zwischengeschaltet sind, verbunden sind.

23. **Leistungswandler-System** nach den Ansprüchen 3 , 4 und 22, **dadurch gekennzeichnet, daß** jeweils eine der weiteren Übertragungsleitungen der Steuereinheit (26) mit dem ersten Betriebsarten-Schaltelement (18) und mit dem zweiten Betriebsarten-Schaltelement (21) verbunden ist, um durch die Schaltsignal-Ansteuerung der beiden Betriebsarten-Schaltelemente (18, 21) entweder einen Pumpenoder einen Generator-Betriebsmodus des hydraulischen und des elektrischen Teilsystems (12, 13) zu aktivieren, wobei außerdem der Steuer- und Regeleinheit (17) separat eine weitere Übertragungsleitung angeschlossen ist.

24. **Leistungswandler-System** nach den Ansprüchen 3 bis 5, 12, 17 bis 19, 22 und 23, **dadurch gekennzeichnet, daß** dem ersten Regler (17a) und dem zweiten Regler (17b) der Steuer- und Regeleinheit (17) und dem zweiten Ventil (18b) des ersten Betriebsarten-Schaltelementes (18) und dem ansteuerbaren Anschlußbereich des zweiten Betriebsarten-Schaltelements (21) und zumindestens einem elektrischen Schalter (23a, 23b) jeweils separat eine weitere mit der Betriebsmodus-Logik verbundene Übertragungsleitung angeschlossen ist, wobei die Betriebsmodus-Logik die erfaßten und ihr zugeleiteten signalgewandelten Sensorsignale in logische Schaltsignale umsetzt, die sie über die weiteren Übertragungsleitungen den Schaltungselementen zuleitet.

25. **Leistungswandler-System** nach Anspruch 22, **dadurch gekennzeichnet, daß** die Betriebsmodus-Logik zusätzlich mit mindestens einer anderen Übertragungsleitung, welche die Übertragung abgesetzter signalgewandelter Schaltbefehle eines Bedieners für Testbeschaltungen innerhalb des hydraulischen Leitungssystems (10) und / oder des elektrischen Verteilungssystems (3) und / oder für die Ein- oder Abschaltung der Automatik-Schaltung realisiert, verbunden ist, die einer Steuer- und Überwachungseinheit, die einem Cockpit (99) zentralisiert ist, angeschlossen ist.

26. **Leistungswandler-System** nach den Ansprüchen 1 bis 8, 12 und 15, **dadurch gekennzeichnet, daß** die mit dem betreffenden Umschaltkontakt-Anschlußbereich der Polumschalteinrichtung verbundene Sammelschienen-Verbindung wenigstens einer ersten elektrischen Sammelschiene (3a) und die mit dem Filter verbundene weitere Sammelschienen-Verbindung wenigstens einer zweiten elektrischen Sammelschiene (3b) angeschlossen ist, die Teilabschnitte des elektrischen Verteilungssystem (10) sind, dem die elektrische Quelle(n) (2) als elektrische Primärleistungsquelle(n), die mit einem triebwerkgetriebenen elektrischer Generator (2) realisiert ist, elektrische Energie einspeist.

27. **Leistungswandler-System** nach Anspruch 3, **dadurch gekennzeichnet, daß** die andere Rohrleitung, die der Verbindungsstelle des ersten Betriebsarten-Schaltelementes (18) angeschlossen ist, mit wenigstens einer Druckleitung (98) des hydraulischen Leitungssystems (10) verbunden ist, wobei dem hydraulischen Leitungssystem (10) wenigstens eine hydraulische Quelle (9) angeschlossen ist, die ihm hydraulische Energie liefert.

28. Leistungswandler-System nach den Ansprüchen 1 und 3, **dadurch gekenn*z*eichnet,** daß die hydraulische Maschine (15) bei Aufnahme mechanischer Wellenleistung funktionell als hydraulischer Pumpe oder bei Aufnahme hydraulischer Antriebsleistung funktionell als hydraulischer Motor eingesetzt ist, und daß die elektrische Maschine (20) bei Aufnahme mechanischer Wellenleistung funktionell als elektrischer Generator oder hei Aufnahme elektrischer Leistung funktionell als elektrisch getriebener Motor eingesetzt ist, wobei die betreffende Arbeitsweise der beiden Maschinen (15, 20) eine entsprechende Ansteuerung des ersten Betriebsarten-Schaltelementes (18) durch die Steuereinheit (26), die ein Setzen des ersten Betriebsarten-Schaltelementes (18) in den entsprechenden Betriebsarten-Modus: "Pumpen- oder Generator-Modus" auslöst, voraussetzt, und wobei mit der wellenmechanischen Kopplung beider Maschinen (15, 20) die bidirektionale Wandlung der hydraulischen in elektrische Energie oder umgekehrt erreicht wird, deshalb sich dadurch die entsprechende Energieart wahlweise in beide Richtungen zwischen mindestens einem hydraulischen und mindestens einem elektrischen Teilsystem-Abschnitt als Bestandteil des hydraulischen Leitungssystems (10) und des elektrischen Verteilungssytems (3) transferieren läßt.

29. **Leistungswandler-System** nach den Ansprüchen 1, 3, 16, 17, 21 und 28, **dadurch gekennzeichnet, daß** die hydraulische Maschine (15) im Betriebsmodus: "Pumpe" eine druckgeregelte Pumpe ist und der wirksame erste Regler (17a) in diesem Betriebsmodus ein Druckregler für den Ausgangsdruck p₀ der hydraulischen Maschine (15) ist, wobei der Pumpenförderstrom des hydraulischen Mediums über das erste Ventil (18a) in das hydraulische Leitungssystem (10) fließt.

30. **Leistungswandler-System** nach den Ansprüchen 1, 3, 16 bis 19, 21, 22 und 28, **dadurch gekennzeichnet, daß** die hydraulische Maschine (15) im Betriebsmodus: "Generator" ein drehzahlgeregelter, sekundärgeregelter hydraulischer Motor ist und der wirksame zweite Regler (17b) in diesem Betriebsmodus ein Drehzahlregler für die Motordrehzahl n_{H} ist, wobei der Betriebsmodus durch die Aktivierung der Ventilstellung des zweiten Ventils (18b) in einen geöffneten Zustand realisiert wird. und der Durchfluß des hydraulischen Mediums aus der dem ersten Betriebsarten-Schaltelement (18) verbundenen Druckleitung (98) einsetzen wird.

31. **Leistungswandler-System** nach den Ansprüchen 1, 3, 17, 18, 28 und 30, **dadurch gekennzeichnet, daß** die mit dem zweiten Regler (17b) realisierte Drehzahlregelung es erlaubt, die mit der elektrischen Maschine (20) bereitgestellte elektrische Energie mit einer definierten Netzfrequenz in das betreffende elektrische Verteilungsnetz (3) einzuspeisen, wobei sich die elektrische Maschine (20) dabei im Betriebsarten-Modus: "Generator" befindet.

32. **Leistungswandler-System** nach Anspruch 30, **dadurch gekennzeichnet, daß** im Betriebsmodus: "Generator" der auf die Verstelleinrichtung (16) wirkende zweite Regler (17b) ein hydromechanischer Regler ist, der die Motordrehzahl n_{H} sensiert oder ein elektrischer oder elektromechanischer Regler ist, der mit einem elektrischen Sensor die Motordrehzahl n_{H} meßtechnisch erfaßt.

33. **Leistungswandler-System** nach den Ansprüchen 1, 17, 29 bis 32, **dadurch gekennzeichnet, daß** der erste und zweite Regler (17a, 17b) entsprechend dem einzustellenden Betriebsarten-Modus über das zweite Ventil (18b) umschaltbar integriert sind.

34. **Leistungswandler-System** nach den Ansprüchen 1, 17, 29 bis 32, **dadurch gekennzeichnet, daß** der erste Regler (17a) im Betriebsarten-Modus: "Pumpe" ein hydromechanischer Regler mit integriertem Stellglied (16) oder ein elektronischer Regler mit einem elektrohydraulischen oder elektromechanischem Stellglied ist, der die Einstellung des Hubvolumens der hydraulischen Maschine (15) vornimmt.

35. **Leistungswandler-System** nach den Ansprüchen 1, 17, 20 und 25, 28 bis 32, **dadurch gekennzeichnet, daß** der Steuer- und Regelmechanismus des ersten Reglers (17a), der vorzugsweise im Betriebsarten-Modus: "Pumpe" als elektronischer Regler ausgeführt ist und mit der Betriebsmodus-Logik der Steuereinheit (26) verbunden ist, mindestens eine der drei folgenden Regler-Beschaltungsmöglichkeiten beinhaltet:
a) Eine Startbeschaltung, bei der die hydraulische Maschine (15) im Betriebsarten-Modus: "Pumpe" auf nahezu Nullhubstellung gehalten wird, bis näherungsweise die Synchrondrehzahl der elektrischen Maschine (20), die sich als elektrisch betriebener Motor im Betriebsarten-Modus: "Pumpe" befindet, erreicht ist;
b) Regler mit einem konstanten Solldruck, der dem Nenndruck p₀ der als hydraulische Quelle (9) eingesetzten triebwerkgetriebenen Hydraulikpumpe(n) entspricht, vorzugsweise als Reglereinstellung für den Betrieb eines definierten bidirektionalen Leistungswandlersystems (40) als unterstützende Spitzenbedarfs-Hilfspumpe;
c) Regler mit einem pumpenfördervolumen-abhängigen Solldruck, wie er der bekannten "soft cut off"-Charakteristik von Hydraulikpumpen entspricht, vorzugsweise als Reglereinstellung für den Betrieb des definierten bidirektionalen Leistungswandlersystems (40) als alleinige, ein Hydrauliksystem speisende Hydraulikpumpe, welches auch der Fall ist, wenn die als hydraulische(n) Quelle(n) (9) eingesetzten Hydraulikpumpen ausgefallen ist (sind).

36. **Leistungswandler-System** nach den Ansprüchen 1, 7 bis 11, 28 und 31, **dadurch gekennzeichnet, daß** die elektrische Maschine (20) im Betriebsarten-Modus: "Generator" mit der elektronischen Einheit (22) als Regel- und Umformeinrichtung verbunden ist, die die bereitgestellte elektrische Energie dermaßen umsetzt, daß sie den Anfordernissen der elektrischen Verbraucher im elektrischen Verteilungs-System (3) oder denen des elektrischen Bordnetzes mit entsprechender Spannungs-, Stromund Frequenzcharakteristik genügt, wobei die elektronische Umformung und Aufbereitung der bereitgestellten elektrischen Energie nach dem Prinzip eines auf Leistungshalbleitern basierenden Frequenz- und Spannungsumrichters geschieht.

37. **Leistungswandler-System** nach Anspruch 7 bis 11, 28 und 36, **dadurch gekennzeichnet, daß** sich die elektronische Einheit (22) durch entsprechende Verpolung auch bifunktional als Motorsteuerung der elektrischen Maschine im Betriebsarten-Modus: "Pumpe' eingesetzen läßt, um ein netzschonendes Hochlaufen der elektrischen Maschine (20) beim Aktivieren des Pumpenbetriebs oder eine Drehzahlregelung der elektrischen Maschine (20) entsprechend den Anforderungen im Betriebsarten-Modus: "Pumpe" zu erreichen.

38. **Leistungswandler-System** nach den Ansprüchen 1, bis 11, 26 und 28. **dadurch gekennzeichnet, daß** die elektrische Maschine (15) eine Drehstrom-Synchronmaschine ist, die bei Aufnahme elektrischer Leistung von der ersten Sammelschiene (3a), welche sie über die (eine) elektrische Sammelschienen-Verbindung bezieht, als elektrischer Motor arbeitet, wobei eine entsprechende Schaltstellung des zweiten Betriebsarten-Schaltelementes (21), nach der die elektronische Einheit (22) abgeschaltet ist, vorausgesetzt wird.

39. **Leistungswandler-System** nach den Ansprüchen 1, 7 bis 11, 26 und 28, **dadurch gekennzeichnet, daß** die wellenangetriebene elektrische Maschine (15) ein Drehstrom-Generator mit schwankender Antriebsdrehzahl n_{E} ist, die über die elektronische Einheit (22) auf die zweite elektrische Sammelschiene (3b) elektrische Leistung konstanter Spannung U und konstanter Frequenz f speist.

40. **Leistungswandler-System** nach Anspruch 1, **dadurch gekennzeichnet, daß** die bidirektional mit dem hydraulischen Leitungssystem (10) und dem elektrischen Verteilungssystem (3) transferierenden beiden Teilsysteme (12, 13) gemeinsam entweder die Funktion einer elektromotoren-getriebenen Hydraulikpumpe oder die Funktion eines elektrischen Alternativ-Generators ausüben.

41. **Leistungswandler-System** nach den Ansprüchen 1, 26 und 28, **dadurch gekennzeichnet, daß** dem hydraulischen Teilsystem (12) wenigstens ein Teil(system)abschnitt des hydraulischen Leitungssystems (10) angeschlossen ist, und daß dem elektrischen Teilsystem (13) wenigstens ein elektrisches Verteilungssystem (3) angeschlossen ist.

42. **Leistungswandler-System** nach Anspruch 1, **dadurch gekennzeichnet, daß** es sich als hydraulische Quelle (9) eines hydraulischen Leitungssystems (10) einsetzen läßt, das zusätzlich über eine hydraulische Alternativ- bzw. Not-Versorgung verfügt, die zur Unterstützung oder bei Ausfall der hydraulischen Quelle(n) (9) benachbarter Systeme oder bei Ausfall der elektrischen Normalversorgungssysteme, die mit dem elektrischen Verteilungssystem (3) verbunden sind, aktiviert wird, und die über das definierte bidirektionale Leistungswandlersystem (40) zur Notversorgung eines oder mehrerer elektrischer Teilsysteme des elektrischen Verteilungssystems (3) zum Zwecke einer elektrischen Versorgung in Notsituationen beitragen kann.

## Claims

1. Power converter system for converting different types of energy for supplying energy systems of a vehicle, which system transfers power bidirectionally between a hydraulic and an electrical on-board system, hydraulic sources (9), which feed into a hydraulic line system (10) with connected hydraulic consumers, being assigned to the hydraulic on-board system, and electrical sources (2), which feed into an electrical distribution system (3) with connected electrical consumers, being assigned to the electrical on-board system, the power converter system consisting of a hydraulic and an electrical subsystem (12, 13), between which a bidirectional power transfer takes place, which each have a machine (15, 20), the rotationally supported machine elements of which are coupled to one another mechanically, the hydraulic subsystem (12) being connected to the hydraulic line system (10) and the electrical subsystem (13) being connected to the electrical distribution system (3), **characterized in that** connected to the two subsystems (12, 13) is a control unit (26), which on the basis of the operating state detected and assigned to the hydraulic line system (10) or the electrical distribution system (3) activates the machines (15, 20), due to which the appropriate setting or switching of an operating mode switching element (18, 21) integrated respectively into the two subsystems (12, 13) thus takes place and one of the two bidirectional functions of the subsystems (12, 13) is activated.

2. Power converter system according to claim 1, **characterized in that** the machine elements of the two machines (15, 20) are coupled mechanically by a shaft or a gear unit, to coordinate the speeds of the two subsystems (12, 13) or the efficiencies of the subsystems (12, 13) at rated power to one another.

3. Power converter according to claim 1, **characterized in that** the hydraulic subsystem (12) is realized with a hydraulic machine (15) and a first operating mode switching element (18), which are connected to one another by a further pipeline, and an open- and closed-loop control unit (17), another pipeline being connected to the first operating mode switching element (18) as a hydraulic element, into which pipeline at least one pressure sensor (24a) is integrated, which detects the pressure of the hydraulic medium flowing through sensitively and routes this signal-wise via a further transmission line connected to it and to the control unit (26) to the latter for further processing, the other pipeline being connected to one of the pressure lines of the hydraulic line system (10), and an additional pipeline being connected to the hydraulic machine (15), which pipeline is connected to one of the tank-connected hydraulic suction lines or the return lines of the hydraulic line system (10), and that connected to the open- and closed-loop control unit (17) is another transmission line, which is connected to a further pressure sensor, which detects sensitively the pressure of the hydraulic medium flowing through the further pipeline and routes it signal-wise via the other transmission line to the open- and closed-loop control unit (17), and that an additional transmission line is connected to the open- and closed-loop control unit (17), which line communicates signal-wise with a stroke volume adjustment device integrated into the hydraulic machine (15), and another transmission line is also connected to it, which line is connected to a speed sensor, which detects sensitively the speed of a rotationally supported machine element of the hydraulic machine (15) or of a mechanical shaft (14) fixedly connected to this machine element and routes it signal-wise via the other transmission line to the open- and closed-loop control unit (17).

4. Power converter system according to claim 1, **characterized in that** the electrical subsystem (13) is realized at least with a rotating electrical machine (20), which has another rotationally supported machine element and an electrical connection area, which is connected electrically conductively to a second operating mode switching element (21) as an electrical element.

5. Power converter system according to claim 4, **characterized in that** the necessary switchovers for the take-up or output of electrical power of the electrical machine (20) from or to the electrical distribution system (3) are executable with the second operating mode switching element (21).

6. Power converter system according to claim 4, **characterized in that** with the second operating mode switching element (21) the electrical separation of the electrical distribution systems (3) connected to it can be realized.

7. Power converter system according to claim 4, **characterized in that** the electrical subsystem (13) additionally comprises an electronic unit (22), which is electrically connected separately to the second operating mode switching element (21), as a result of. which the electrical machine (20) forms an electrical series circuit with the second operating mode switching element (21) and the electronic unit (22).

8. Power converter system according to claim 7, **characterized in that** the electronic unit (22) comprises a rectifier and an inverter and an electrical filter, which are connected electrically in series in this order.

9. Power converter according to claim 7, **characterized in that** the electronic unit (22) comprises only the rectifier and the inverter, which are connected electrically in series in this order, and the inverter is connected electrically via the second operating mode switching element (21) to the electrical machine (20) and the rectifier, to which an electrical connection is wired that is connected to the electrical distribution system (3), is supplied with electrical power.

10. Power converter according to claim 7, **characterized in that** the electronic unit (22) comprises a rectifier and an inverter, which are connected electrically in series in this order, and the rectifier is connected electrically via the second operating mode switching element (21) to the electrical machine (20) and the inverter, to which an electrical connection is wired, supplies electrical power to the electrical distribution system (3) via the latter.

11. Power converter according to one of claims 9 or 10, **characterized in that** the electrical filter is optionally connected electrically in outgoing circuit to the inverter.

12. Power converter according to claims 4 and 7, **characterized in that** the second operating mode switching element (21) is realized with a multipole electrical pole-changing device, the electrical connection area of the electrical machine (20) being connected to a foot contact connection area of the pole-changing device and the electronic unit (22) as well as an electrical bus bar connection being connected referring to the relevant power flow direction separately to separate contact sections of a changeover contact connection area of the pole-changing device.

13. Power converter system according to claim 4, **characterized in that** a voltage regulator is connected in addition between a connection area of the electrical machine (20) executed as a control input and a connection area assigned to the second operating mode switching element (21).

14. Power converter according to claims 12 and 13, **characterized in that** the voltage regulator is wired in particular to a connection area of the pole-changing device.

15. Power converter according to claims 8 and 12, **characterized in that** the rectifier is connected to a separate relevant contact section of the changeover contact connection area of the pole-changing device, a further connection area of the pole-changing device also being connected to the electrical filter.

16. Power converter system according to claim 3, **characterized in that** the hydraulic machine (15) is an adjustable displacer machine, preferably an axial piston engine with an integrated adjustable swash plate (15a), the stroke volume of which can be influenced by an open- and closed-loop control unit (17).

17. Power converter system according to claims 3 and 16, **characterized in that** the open- and closed-loop control unit (17) of the hydraulic subsystem (12) is constructed with a first and a second controller (17a, 17b) and an adjusting device (16) connected between the two controllers (17a, 17b), which in this sequence produce a signalling series circuit, the first controller (17a) being connected via the other transmission line to the further pressure sensor and the adjusting device (17) being connected via the additional transmission line to the swash plate (15a) and the second controller (17b) being connected in signalling terms via the other transmission line to the speed sensor.

18. Power converter system according to claim 3, **characterized in that** the first operating mode switching element (18) is a combination valve, which realizes the function of two valves (18a, 18b) connected in parallel, or represents a valve group that is formed from the combination of two valves (18a, 18b) connected in parallel.

19. Power converter system according to claim 18, **characterized in that** the valve group is composed of a first valve (18a) and a second valve (18b), the valve connections of which are connected on the input side to a first branching point (18c) and on the output side to a second branching point (18d), the first branching point (18c) being connected to the other pipeline and the second branching point (18d) to the further pipeline.

20. Power converter system according to claim 19, **characterized in that** the first valve (18a) is formed as a non-return valve and the second valve (18b) is formed as a switchable stop valve.

21. Power converter system according to claims 18 or 19, **characterized in that** the combination valve or the valve group in the basic position of a first valve (18a) not activated by a signal realizes the function of a non-return valve, which blocks the flow of a hydraulic medium out of the hydraulic line system (10), and that the combination valve or the valve group in the position activated by a signal permits the flow of the hydraulic medium to pass out of the hydraulic line system (10) to the hydraulic machine (15).

22. Power converter system according to claim 1, **characterized in that** an operating mode logic is integrated into the control unit (26), which logic also comprises an automatic circuit and is connected to a plurality of transmission lines, which are connected to the pressure-detecting sensors that are integrated into the lines of the hydraulic line system (10), to detect in these the operating state: "adequate pressure of the hydraulic medium" in the hydraulic line system (10), and are connected to the voltage-registering sensors that are arranged on the electrical line system (3), to detect on these the operating state: "adequate voltage on the electrical distribution system (3)", the relevant operating states being routed signal-wise to the control unit (26) by the sensors, and that connected furthermore to the operating mode logic is a plurality of further transmission lines, which it uses to transmit the sensor signals converted into switching signals and which are connected to the hydraulic subsystem (12) and the electrical subsystem (13) and a plurality of electrical switches (23a, 23b), which are interconnected to the electrical bus bar connections connected to the electrical subsystem (13).

23. Power converter system according to claims 3, 4, and 22, **characterized in that** respectively one of the further transmission lines of the control unit (26) is connected to the first operating mode switching element (18) and to the second operating mode switching element (21), in order to activate either a pump or a generator operating mode of the hydraulic and the electrical subsystem (12, 13) by switching signal activation of the two operating mode switching elements (18, 21), a further transmission line also being connected separately to the open- and closed-loop control unit (17).

24. Power converter system according to claims 3 to 5, 12, 17 to 19, 22 and 23, **characterized in that** a further transmission line connected to the operating mode logic is connected respectively separately to the first controller (17a) and the second controller (17b) of the open- and closed-loop control unit (17) and the second valve (18b) of the first operating mode switching element (18) and the activatable connection area of the second operating mode switching element (21) and at least one electrical switch (23a, 23b), the operating mode logic converting the signal-converted sensor signals detected and routed to it into logical switching signals, which it routes via the further transmission lines to the circuit elements.

25. Power converter system according to claim 22, **characterized in that** the operating mode logic is additionally connected to at least one other transmission line, which realizes the transmission of transmitted signal-converted switching commands of an operator for test protective circuits within the hydraulic line system (10) and / or the electrical distribution system (3) and / or for switching on and off the automatic circuit, which is connected to a control and monitoring unit that is centralized to a cockpit (99).

26. Power converter system according to claims 1 to 8, 12 and 15, **characterized in that** the bus bar connection connected to the relevant changeover contact connection area of the pole-changing device is connected at least to a first electrical bus bar (3a) and the further bus bar connection connected to the filter is connected at least to a second electrical bus bar (3b), which are subsections of the electrical distribution system (10), to which the electrical source(s) (2) as electrical primary power source(s), realized by an electrical generator (2) driven by a propulsion unit, feeds electrical energy.

27. Power converter system according to claim 3, **characterized in that** the other pipeline, which is connected to the connection point of the first operating mode switching element (18), is connected to at least one pressure line (98) of the hydraulic line system (10), at least one hydraulic source (9) being connected to the hydraulic line system (10) and supplying it with hydraulic energy.

28. Power converter system according to claims 1 and 3, **characterized in that** the hydraulic machine (15), when taking up mechanical shaft power, is used functionally as a hydraulic pump, or when taking up hydraulic drive power is used functionally as a hydraulic motor, and that the electrical machine (20), when taking up mechanical shaft power, is used functionally as an electrical generator, or when taking up electrical power is used functionally as an electrically driven motor, the relevant operating mode of the two machines (15, 20) presupposing corresponding activation of the first operating mode switching element (18) by the control unit (26), which triggers setting of the first operating mode switching element (18) to the corresponding operating mode: "pump or generator mode", and with the shaft-mechanical coupling of both machines (15, 20) the bidirectional conversion of hydraulic into electrical energy or vice-versa being achieved, therefore the appropriate type of energy thereby being able to be transferred optionally in both directions between at least one hydraulic and at least one electrical subsystem section as a component of the hydraulic line system (10) and the electrical distribution system (3).

29. Power converter system according to claims 1, 3, 16, 17, 21 and 28, **characterized in that** the hydraulic machine (15) in the operating mode: "pump" is a pressure-regulated pump and the active first controller (17a) in this operating mode is a pressure regulator for the output pressure pₒ of the hydraulic machine (15), the pump delivery flow of the hydraulic medium flowing via the first valve (18a) into the hydraulic line system (10).

30. Power converter system according to claims 1, 3, 16 to 19, 21, 22 and 28, **characterized in that** the hydraulic machine (15) in the operating mode:
"generator" is a speed-controlled, secondary-controlled hydraulic motor and the active second controller (17b) in this operating mode is a speed controller for the motor speed n_{H}, the operating mode being realized by activation of the valve position of the second valve (18b) in an open state and the through-flow of the hydraulic medium out of the pressure line (98) connected to the first operating mode switching element (18) being used.

31. Power converter system according to claims 1, 3, 17, 18, 28 and 30, **characterized in that** the speed control realized with the second controller (17b) permits the electrical energy provided by the electrical machine (20) to be fed into the relevant electrical distribution network (3) at a defined network frequency, the electrical machine (20) being in the operating mode: "generator" in this case.

32. Power converter system according to claim 30, **characterized in that** in the operating mode: "generator" the second controller (17b) acting on the adjusting device (16) is a hydromechanical controller, which senses the motor speed n_{H}, or an electrical or electromechanical controller, which measures the motor speed n_{H} with an electrical sensor.

33. Power converter system according to claims 1, 17, 29 to 32, **characterized in that** the first and second controller (17a, 17b) are integrated switchably via the second valve (18b) according to the operating mode to be set.

34. Power converter system according to claims 1, 17, 29 to 32, **characterized in that** the first controller (17a) in the operating mode: "pump" is a hydromechanical controller with an integrated actuator (16) or an electronic controller with an electrohydraulic or electromechanical actuator, which undertakes setting of the stroke volume of the hydraulic machine (15).

35. Power converter system according to claims 1, 17, 20 and 25, 28 to 32, **characterized in that** the open- and closed-loop control mechanism of the first controller (17a), which is preferably executed in the operating mode: "pump" as an electronic controller and is connected to the operating mode logic of the control unit (26), contains at least one of the three following controller circuit options:
a) A start circuit, in which the hydraulic machine (15) is held at virtually zero stroke position in the operating mode: "pump", until approximately the synchronous speed of the electrical machine (20), which acts as an electrically driven motor in the operating mode "pump", is reached;
b) Controller with a constant reference pressure, which corresponds to the nominal pressure pₒ of the hydraulic pump(s) driven by a propulsion unit and used as a hydraulic source (9), preferably as a controller setting for the operation of a defined bidirectional converter system (40) as a supporting peak demand auxiliary pump;
c) Controller with a pump-conveying-volume-dependent reference pressure, such as corresponds to the known "soft cut-off" characteristic of hydraulic pumps, preferably as a controller setting for the operation of the defined bidirectional power converter system (40) as a sole hydraulic pump supplying a hydraulic system, which is also the case if the hydraulic pumps used as hydraulic source(s) (9) has (have) failed.

36. Power converter system according to claims 1, 7 to 11, 28 and 31, **characterized in that** the electrical machine (20) is connected in the operating mode: "generator" to the electronic unit (22) as a control and conversion device, which converts the electrical energy supplied such that it satisfies the requirements of the electrical consumers in the electrical distribution system (3) or those of the electrical on-board network with a suitable voltage, current and frequency characteristic, the electronic conversion and conditioning of the electrical energy supplied taking place according to the principle of a frequency and voltage converter based on power semiconductors.

37. Power converter system according to claim 7 to 11, 28 and 36, **characterized in that** the electronic unit (22) can be used due to appropriate polarity reversal also bifunctionally as a motor controller of the electrical machine in the operating mode: "pump", in order to achieve a network-saving run-up of the electrical machine (20) on activation of the pump operation or speed control of the electrical machine (20) according to the requirements in the operating mode: "pump".

38. Power converter system according to claims 1, 7 to 11, 26 and 28, **characterized in that** the electrical machine (15) is a three-phase synchronous machine, which on taking up electrical power from the first bus bar (3a), which obtains it via the (an) electrical bus bar connection, operates as an electric motor, a corresponding switching position of the second operating mode switching element (21), according to which the electronic unit (22) is turned off, being presupposed.

39. Power converter system according to claims 1, 7 to 11, 26 and 28, **characterized in that** the shaft-driven electrical machine (15) is a three-phase generator with varying drive speed n_{E}, which supplies electrical power of a constant voltage U and constant frequency f to the second electrical bus bar (3b) via the electronic unit (22).

40. Power converter system according to claim 1, **characterized in that** the two subsystems (12, 13) transferring bidirectionally with the hydraulic line system (10) and the electrical distribution system (3) jointly exercise either the function of an electro-motor-driven hydraulic pump or the function of an electrical alternative generator.

41. Power converter system according to claims 1, 26 and 28, **characterized in that** connected to the hydraulic subsystem (12) is at least one sub(system) section of the hydraulic line system (10), and that connected to the electrical subsystem (13) is at least one electrical distribution system (3).

42. Power converter system according to claim 1, **characterized in that** it can be used as a hydraulic source (9) of a hydraulic line system (10), which also has a hydraulic alternative or emergency supply, which is activated for support or in the event of failure of the hydraulic source(s) (9) of adjacent systems or in the event of failure of the electrical normal supply systems connected to the electrical distribution system (3), and which can contribute to the emergency supplying of one or more electrical subsystems of the electrical distribution system (3) via the defined bidirectional power converter system (40) for the purpose of an electrical supply in emergency situations.

## Revendications

1. Système convertisseur de puissance destiné à la conversion de types d'énergies différents pour l'alimentation de systèmes énergétiques d'un aéronef, ledit système convertisseur transférant une puissance bidirectionnelle entre un système de bord hydraulique et un système de bord électrique, des sources hydrauliques (9) alimentant un système de canalisation (10) hydraulique avec dissipateurs hydrauliques raccordés étant reliées au système de bord hydraulique et des sources électriques (2) alimentant un système de dissipation électrique (3) avec dissipateurs électriques reliés étant reliées au système de bord électrique, le système convertisseur de puissance étant constitué de sous-systèmes (12, 13) hydraulique et électrique entre lesquels a lieu un transfert bidirectionnel de puissance, chaque sous-système présentant une machine (15, 20) dont les éléments disposés de manière à pouvoir tourner sont reliés mécaniquement les uns aux autres, le sous-système hydraulique (1) étant relié au système de canalisations hydrauliques (10) et le sous-système électrique (13) étant relié au système de dissipation électrique (3), **caractérisé en ce que** une unité de commande commandant les machines (15, 20) sur base des informations saisies et de l'état de marche relatif au système de canalisation hydraulique (10) ou au système de dissipation électrique (3) a été raccordée aux deux sous-systèmes (12, 13), entraînant le réglage ou la commutation d'un élément de commutation des modes de fonctionnement (18, 21) intégré aux divers sous-systèmes (12, 13) et activant une des deux fonctions bidirectionnelles des sous-systèmes (12, 13).

2. Système convertisseur de puissance selon la revendication 1, **caractérisé en ce que** les éléments des deux machines (15, 20) sont reliés via un arbre ou un mécanisme afin d'harmoniser, en cas de puissance nominale, les vitesses ou les rendements des deux sous-systèmes (12, 13).

3. Système convertisseur de puissance selon la revendication 1, **caractérisé en ce que** le sous-système hydraulique (12) a été réalisé à l'aide, d'une part, d'une machine hydraulique (15) et d'un premier élément de commutation des modes de fonctionnement (18) reliés l'un à l'autre via une canalisation supplémentaire, et d'autre part, d'une unité de commande et de réglage (17), une autre canalisation comprenant au moins un capteur de pression (24a) saisissant de manière sensible la pression de l'agent hydraulique qui circule et transmettant cette pression sous la forme d'un signal via une autre conduite de transmission reliée au dit capteur et à l'unité de commande (26) étant raccordée comme élément hydraulique au premier élément de commutation des modes de fonctionnement, ladite canalisation étant reliée à une des canalisations sous pression du système de canalisation hydraulique, une canalisation supplémentaire reliée à une des conduites d'aspiration hydrauliques reliées au réservoir ou aux conduites de retour du système de canalisation hydraulique (10) étant raccordée à la machine hydraulique, **caractérisé en ce que** une autre canalisation de transmission reliée à un capteur de pression supplémentaire est reliée à l'unité de commande et de réglage (17), ledit capteur captant de manière sensible la pression de l'agent hydraulique traversant l'autre canalisation et transmettant ladite pression sous la forme d'un signal via l'autre canalisation de transmission de l'unité de commande et de réglage (17), **caractérisé en ce que** une canalisation de transmission supplémentaire communiquant sous forme de signal avec un déplacement de volume intégré dans la machine hydraulique (15) est raccordée à l'unité de commande et de réglage (17), **caractérisée en ce que** une autre canalisation de transmission est raccordée à l'unité de commande et de réglage (17), ladite canalisation étant reliée à un capteur de régime captant de manière sensible le régime d'un élément de machine disposé de manière à pouvoir tourner autour de la machine hydraulique (15) ou d'un arbre (14) mécanique relié de manière rigide au dit élément de machine et transmettant ledit régime sous forme de signal via l'autre canalisation de transmission de l'unité de commande et de réglage (17).

4. Système convertisseur de puissance selon la revendication 1, **caractérisé en ce que** le sous-système électrique (13) a été réalisé au moins avec une machine électrique rotative (20) présentant un autre élément disposé de manière à pouvoir tourner et un segment de raccordement électrique relié de façon électro-conductrice avec un deuxième élément de commutation des modes de fonctionnement (21), comme élément électrique.

5. Système convertisseur de puissance selon la revendication 4, **caractérisé en ce que** les commutations nécessaires pour la réception ou la transmission de la puissance électrique de la machine électrique (20) du ou au système de dissipation électrique (3) peut être réalisé avec le deuxième élément de commutation des modes de fonctionnement (21).

6. Système convertisseur de puissance selon la revendication 4, **caractérisé en ce que** l'isolement électrique des systèmes de dissipation électrique reliés au second élément de commutation des modes de fonctionnement (21) peut être réalisé à l'aide du second élément de commutation des modes de fonctionnement (21).

7. Système convertisseur de puissance selon la revendication 4, **caractérisé en ce que** le sous-système électrique (13) comprend également une unité électronique (22) raccordée distinctement et électriquement au deuxième élément de commutation des modes de fonctionnement (21), en conséquence de quoi la machine électrique forme donc, avec le deuxième élément de commutation des modes de fonctionnement (21) et l'unité électronique (22), un couplage électrique en série.

8. Système convertisseur de puissance selon la revendication 7, **caractérisé en ce que** l'unité électronique (22) comprend un redresseur de courant, un onduleur et un filtre électrique couplés en série, dans cet ordre.

9. Système convertisseur de puissance selon la revendication 7, **caractérisé en ce que** l'unité électronique (22) ne comprend que le redresseur de courant et l'onduleur, lesquels sont couplés en série dans cet ordre, **caractérisé en ce que** l'onduleur est relié électriquement à la machine électrique (20) via le deuxième élément de commutation des modes de fonctionnement (21) et **caractérisé en ce que** le redresseur de courant auquel est raccordé une liaison électrique reliée au système de dissipation électrique (3) est alimenté par une puissance électrique.

10. Système convertisseur de puissance selon la revendication 7, **caractérisé en ce que** l'unité électronique (22) comprend un redresseur de courant et un onduleur couplé en série dans cet ordre, **en ce que** le redresseur de courant est relié électriquement à la machine électrique (20) via le deuxième élément de commutation des modes de fonctionnement (21), et **en ce que** l'onduleur auquel est relié une liaison électrique alimente le système de dissipation électrique via la dite puissance électrique.

11. Système convertisseur de puissance selon une des revendications 9 ou 10, **caractérisé en ce que** le filtre électrique est raccordé électriquement au redresseur de courant, en aval.

12. Système convertisseur de puissance selon les revendications 4 et 7,
**caractérisé en ce que** le deuxième élément de commutation des modes de fonctionnement (21) a été réalisé avec un dispositif multipolaire électrique de commutation des connexions polaires, la zone de raccordement électrique de la machine électrique (20) étant raccordée à une zone de raccordement pour interrupteur à commande au pied du dispositif de commutation des connexions polaires et l'unité électronique (22) étant, au même titre qu'une liaison électrique des barres collectrices, raccordée aux segments de contact d'une zone de raccordement à contact de permutation du dispositif de commutation des connexions polaires, lesdits segments étant isolés par rapport à la direction de l'écoulement de puissance.

13. Système convertisseur de puissance selon la revendication 4,
**caractérisé en ce que** un régulateur de tension est raccordé entre une zone de raccordement de la machine électrique (20) conçue sous la forme d'une entrée de commande et une zone de raccordement reliée à un deuxième élément de commutation des modes de fonctionnement (21).

14. Système convertisseur de puissance selon les revendications 12 et 13,
**caractérisé en ce que** le régulateur de tension est raccordé plus particulièrement à une zone de raccordement du dispositif de commutation des connexions polaires.

15. Système convertisseur de puissance selon les revendications 8 et 12,
**caractérisé en ce que** le redresseur de puissance est raccordé à un segment de contact séparé correspondant de la zone de raccordement à contact de permutation du dispositif de commutation des connexions polaires, une autre zone de raccordement du dispositif de commutation des connexions polaires étant raccordée au filtre électrique.

16. Système convertisseur de puissance selon la revendication 3, **caractérisé en ce que** la machine hydraulique (15) est une machine volumétrique réglable, et de préférence une machine à pistons axiaux avec disque en mutation (15a) réglable intégré dont le volume engendré peut être influencé par une unité de commande et de réglage (17).

17. Système convertisseur de puissance selon les revendications 3 et 16,
**caractérisé en ce que** l'unité de commande et de réglage (17) du sous-système hydraulique (12) est conçu avec un premier et un deuxième régulateur (17a, 17b) ainsi qu'un dispositif de réglage (16) raccordé entre les deux régulateurs (17a, 17b), ces différents éléments donnant lieu, dans cet ordre, à un couplage en série, via une technique de signalisation, le premier régulateur (17a) étant raccordé, via l'autre canalisation de transmission, à l'autre capteur de pression, le dispositif de réglage (17) étant raccordé, via la canalisation de transmission supplémentaire, au disque en mutation (15a) et le deuxième régulateur (17b) étant relié au capteur de régime, via la canalisation de transmission la plus éloignée et par une technique de signalisation.

18. Système convertisseur de puissance selon la revendication 3, **caractérisé en ce que** le premier élément de commutation des modes de fonctionnement (18) est une soupape combinée agissant comme deux soupapes raccordées en parallèle (18a, 18b) ou représentant un groupe de soupapes constitué d'une combinaison de deux soupapes raccordées en parallèle (18a, 18b).

19. Système convertisseur de puissance selon la revendication 18, **caractérisé en ce que** le groupe de soupapes se compose d'une première soupape (18a) et d'une deuxième soupape (18b) dont les raccordements sont situés du côté de l'entrée d'un premier point d'embranchement (18c) et du côté de la sortie d'un deuxième point d'embranchement (18d), le premier point d'embranchement (18c) étant relié à l'autre canalisation et le deuxième point d'embranchement (18d) à la canalisation la plus éloignée.

20. Système convertisseur de puissance selon la revendication 19, **caractérisé en ce que** la première soupape (18a) se présente sous la forme d'une soupape de retenue et la deuxième soupape (18b) sous la forme d'une soupape d'arrêt commutable.

21. Système convertisseur de puissance selon les revendications 18 ou 19, **caractérisé en ce que** la soupape combinée ou le groupe de soupapes, dans la position de base non activée par signal d'une première soupape (18a), remplit(remplissent) la fonction d'une soupape d'arrêt arrêtant l'écoulement d'un agent hydraulique hors du système de canalisations hydrauliques (10) et **en ce que** la soupape combinée ou le groupe de soupapes, dans la position activée par signal, laisse(nt) l'agent hydraulique s'écouler du système de canalisations hydrauliques (10) vers la machine hydraulique (15).

22. Système convertisseur de puissance selon la revendication 1, **caractérisé** en ce dans l'unité de commande (26) est intégrée une logique de mode de fonctionnement comprenant une commutation automatique et raccordée à plusieurs canalisations de transmission elles-mêmes raccordées aux capteurs de pression, eux-mêmes raccordés aux canalisations du système de canalisations hydrauliques (10), afin de saisir, dans les dites canalisations du système de canalisations hydrauliques (10), l'état de marche : 'pression suffisante de l'agent hydraulique' et les dites canalisations étant elles-mêmes raccordées aux capteurs de tension situés sur le système de canalisations électriques (3) et destinés à saisir, sur les dites canalisations, l'état de marche 'tension suffisante sur le système de dissipation électrique (3)', les états de marche correspondants de l'unité de commande (26) étant transmis sous forme de signaux par les capteurs, et en ce que à la logique de mode de fonctionnement sont raccordés plusieurs canalisations de transmissions utilisées pour transmettre les signaux de capteurs convertis en signaux de commutation et raccordées au sous-système hydraulique (12), au sous-système électrique (13) et à plusieurs commutateurs électriques (23a, 23b) raccordés entre les liaisons électriques de barres collectrices reliées au sous-système électrique (13).

23. Système convertisseur de puissance selon les revendications 3, 4 et 22, **caractérisé en ce que**, à chaque fois, une canalisation de transmission supplémentaire de l'unité de commande (26) est raccordée au premier élément de commutation des modes de fonctionnement (18) et au deuxième élément de commutation des modes de fonctionnement (21), afin d'activer, par la commande de signaux de commutation des deux éléments de commutation des modes de fonctionnement (18, 21), un mode de fonctionnement d'une pompe ou d'un générateur des sous-systèmes hydraulique et électrique (12, 13), une autre conduite de transmission étant reliée distinctement à l'unité de commande et de réglage (17).

24. Système convertisseur de puissance selon les revendications 3 à 5, 12, 17 à 19, 22 et 23, **caractérisé en ce que** une canalisation de transmission supplémentaire raccordée à la logique de mode de fonctionnement est reliée séparément au premier régulateur (17a) et au second régulateur (17b) de l'unité de commande et de réglage (17), à la deuxième soupape (18b) du premier élément de commutation des modes de fonctionnement (18), à la zone de raccordement dirigeable du deuxième élément de commutation des modes de fonctionnement (21) et à au moins un commutateur électrique (23a, 23b), la logique de mode de fonctionnement convertissant les signaux de capteurs saisis et transmis en signaux de commutation logiques avant de les transmettre aux éléments de commutation via les autres canalisations de transmission.

25. Système convertisseur de puissance selon la revendication 22, **caractérisé en ce que** la logique de mode de fonctionnement est raccordée à au moins une autre canalisation de transmission assurant la transmission d'instructions de commutation d'un utilisateur transformées en signaux, pour des commutations tests à l'intérieur du système de canalisations hydrauliques (10) et / ou pour l'enclenchement ou le désenclenchement de la commutation automatique, la dite canalisation de transmission étant par ailleurs raccordée à une unité de commande et de contrôle centralisée dans un poste de pilotage (99).

26. Convertisseur de puissance selon les revendications 1 à 8, 12 et 15, **caractérisé en ce que** la liaison de barres collectrices reliée à la zone de raccordement par contacts de permutation correspondante du dispositif de commutation des connexions polaires est raccordée à au moins une première barre collectrice électrique (3a) et **en ce que** l'autre liaison à barres collectrices raccordées au filtre est raccordée à au moins une deuxième barre collectrice (3b) électrique et **en ce que** les deux liaisons à barres collectrices consistent en des segments partiels alimentés du système de dissipation électrique (10) alimentés en énergie par la (les) source(s) électrique(s) (2) sous la forme d'une (de) source(s) de puissance électrique primaire réalisée (s) à l'aide d'un générateur électrique (2) actionné par des réacteurs.

27. Système convertisseur de puissance selon la revendication 3, **caractérisé en ce que** l'autre canalisation raccordée au point de raccordement du premier élément de commutation des modes de fonctionnement (18) est raccordée à au moins une canalisation sous pression (98) du système de canalisations hydrauliques (10), au moins une source hydraulique (9) alimentant le système de canalisations hydrauliques étant raccordée au système de canalisations hydrauliques (10).

28. Système convertisseur de puissance selon les revendications 1 et 3, **caractérisé en ce que** la machine hydraulique (15) a été utilisée de manière fonctionnelle comme pompe hydraulique lors de la réception d'une puissance au plateau d'accouplement mécanique ou comme moteur hydraulique lors de la réception d'une puissance d'entraînement hydraulique, **en ce que** la machine électrique (20) a été utilisée de manière fonctionnelle comme générateur électrique lors de la réception d'une puissance au plateau d'accouplement mécanique ou comme moteur à propulsion électrique lors de la réception d'une puissance électrique, le mode de travail correspondant des deux machines (15, 20) présupposant une commande correspondante du premier élément de commutation des modes de fonctionnement (18) via l'unité de commande (26), laquelle entraîne un réglage du premier élément de commutation des modes de fonctionnement (18) en mode de fonctionnement : 'pompe ou générateur', et la conversion bidirectionnelle de l'énergie hydraulique en énergie électrique ou vice-versa étant obtenue par couplage à mécanique ondulatoire des deux machines (15, 20), ce qui permet le transfert du type d'énergie correspondant dans les deux sens entre au moins un segment de sous-système hydraulique et au moins un segment de sous-système électrique faisant partie du système de canalisations hydrauliques (10) et du système de dissipation électrique (3).

29. Système convertisseur de puissance selon les revendications 1, 3, 16, 17, 21 et 28, **caractérisé en ce que** la machine hydraulique (15), en mode de fonctionnement 'Pompe', est une pompe réglée par pression et le premier régulateur (17a) utile est, dans ce même mode de fonctionnement, un régulateur de pression pour la pression initiale pₒ de la machine hydraulique (15), le débit de pompage de l'agent hydraulique via la première soupape (18a) s'écoulant dans le système de canalisations hydrauliques (10).

30. Système convertisseur de puissance selon les revendications 1, 3, 16 à 19, 21, 22 et 28, **caractérisé en ce que** la machine hydraulique (15), en mode de fonctionnement 'Générateur', est un moteur hydraulique à vitesse réglée et à réglage secondaire et le deuxième régulateur (17b) utile, dans ce même mode de fonctionnement, est un régulateur de vitesse pour la vitesse de moteur n₄, le mode de fonctionnement étant obtenu par activation de la position de la deuxième soupape (18b) en situation ouverte et l'écoulement de l'agent hydraulique est activé à partir de la canalisation sous pression (98) raccordée au premier élément de commutation des modes de fonctionnement (18).

31. Système convertisseur de puissance selon les revendications 1, 3, 17, 18, 28 et 30, **caractérisé en ce que** le réglage de vitesse réalisé à l'aide du deuxième régulateur (17b) perme d'injecter dans le réseau de dissipation électrique (3) concerné l'énergie électrique préparée avec la machine électrique (20), avec une fréquence de réseau définie, la machine électrique (20 étant en mode de fonctionnement 'Générateur'.

32. Système convertisseur de puissance selon la revendication 30, **caractérisé en ce que**, en mode de fonctionnement 'Générateur', le deuxième régulateur (17b) agissant sur le dispositif de réglage (16) est un régulateur hydromécanique captant la vitesse de moteur n₄ ou un régulateur électrique ou électromécanique captant, au moyen d'un capteur électrique et par une technique de mesurage, la vitesse de moteur n₄.

33. Système convertisseur de puissance selon les revendications 1, 17, 29 à 32, **caractérisé en ce que** le premier et le deuxième régulateur (17a, 17b) sont intégrés de manière à pouvoir commuter via la deuxième soupape (18b) et conformément au mode de fonctionnement à régler.

34. Système convertisseur de puissance selon les revendications 1, 17, 29 à 32, **caractérisé en ce que** le premier régulateur (17a), en mode de fonctionnement 'Pompe', est un régulateur hydromécanique à vérin (16) intégré ou un régulateur électronique à vérin électrohydraulique ou électromécanique réglant le volume engendré de la machine hydraulique (15).

35. Système convertisseur de puissance selon les revendications 1, 17, 20 et 25, 28 à 32, **caractérisé en ce que** le mécanisme de commande et de réglage du premier régulateur (17a), exécuté de préférence en mode de fonctionnement 'pompe', comme régulateur électronique, et relié à la logique de mode de fonctionnement de l'unité de commande (26), comprend au moins une des trois possibilités de raccordement du régulateur suivantes :
a) Raccordement de départ, dans lequel la machine hydraulique (15), en mode de fonctionnement 'Pompe' est maintenue quasiment en position de levage 'zéro', jusqu'à ce que la vitesse synchrone de la machine électrique (20) réglée, comme moteur électrique, en mode de fonctionnement 'Pompe', soit atteinte, par approximations.
b) Régulateur à pression théorique constante correspondant à la pression nominale p₀ de la (des) pompe(s) hydraulique(s) activée(s) par réacteurs et utilisée(s) comme source hydraulique (9), de préférence comme réglage de régulateur pour l'exploitation d'un système convertisseur de puissance (40) bidirectionnel défini comme pompe auxiliaire de soutien à consommation de pointe.
c) Régulateur à pression théorique tributaire du volume d'extraction de la pompe et correspondant à la caractéristique 'soft cut off' des pompes hydrauliques, de préférence comme réglage de régulateur pour l'exploitation du système convertisseur de puissance (40) bidirectionnel défini, comme pompe hydraulique alimentant un système hydraulique, ce qui est également le cas lorsque les pompes hydrauliques utilisées comme source(s) hydraulique(s) (9) sont en panne.

36. Système convertisseur de puissance selon les revendications 1, 7 à 11, 28 et 31, **caractérisé en ce que** la machine électrique (20), en mode de fonctionnement 'Générateur', est raccordée à l'unité électronique (22) comme dispositif de réglage et de conversion convertissant l'énergie électrique mise à disposition de telle sorte qu'elle réponde aux exigences des dissipateurs d'électricité du système de dissipation électrique (3) ou aux exigences du réseau de bord électrique à caractéristique de tension, de flux et de fréquence correspondante, la conversion électronique et la préparation de l'énergie électrique mise à disposition étant assurées selon le principe d'un changeur de fréquence et de tension basé sur des semi-conducteurs de puissance.

37. Système convertisseur de puissance selon les revendications 7 à 11, 28 à 36, **caractérisé en ce que** l'unité électronique (22) peut également, par polarisation adéquate, être utilisée de manière bifonctionnelle, comme commande de moteur de la machine électrique en mode de fonctionnement 'Pompe', afin d'obtenir une accélération de la machine électrique (20) épargnant le réseau lors de l'activation de la pompe ou encore un réglage de la vitesse de la machine électrique conformément aux exigences du mode de fonctionnement 'Pompe'.

38. Système convertisseur de puissance selon les revendications 1, 7 à 11, 26 et 28, **caractérisé en ce que** la machine électrique (15) est une machine synchrone à courant triphasé fonctionnant, lors de la réception d'une puissance électrique à partir de la première barre collectrice (3a) se rapportant à une liaison électrique de barres collectrices, comme moteur électrique, une position de commutation correspondante du deuxième élément de commutation des modes de fonctionnement (21) après lequel l'unité électrique (22) est déclenchée étant prévue.

39. Système convertisseur de puissance selon les revendications 1, 7 à 11, 26 et 28, **caractérisé en ce que** la machine électrique actionnée par arbre (15) est un générateur de courant triphasé à vitesse d'entraînement variable n_{E} injectant une puissance électrique de tension constante U et de fréquence constante F sur la deuxième barre collectrice (3b), via l'unité électronique (22).

40. Système convertisseur de puissance selon la revendication 1, **caractérisé en ce que** les deux sous-systèmes (12, 13) échangeant le courant de manière bidirectionnelle avec le système de canalisations hydrauliques (10) et le système de dissipation électrique (3) exercent conjointement la fonction d'une pompe hydraulique actionnée par un moteur électrique ou d'un générateur électrique alternatif.

41. Système convertisseur de puissance selon les revendications 1, 26 et 28, **caractérisé en ce que** au moins un segment partiel (de sous-système) du système de canalisations hydrauliques (10) est raccordé au sous-système hydraulique (12) et **en ce que** au moins un système de dissipation électrique (3) est raccordé au sous-système électrique (13).

42. Système convertisseur de puissance selon la revendication 1, **caractérisé en ce que** ce système peut être utilisé comme source hydraulique (9) d'un système de canalisations hydrauliques (10) disposant, en sus, d'une alimentation hydraulique alternative ou d'urgence activée à titre de soutien, en cas de dysfonctionnement des systèmes voisins de la (des) source(s) hydraulique(s) (9) ou en cas de dysfonctionnement des systèmes d'alimentation électriques traditionnels raccordés au système de dissipation électrique (3), et pouvant contribuer, via le système convertisseur de puissance bidirectionnel (40) défini, à alimenter d'urgence un ou plusieurs sous-système(s) électrique(s) du système de dissipation électrique (3), en vue d'une alimentation électrique en situation d'urgence.
